# EUROPÄISCHE PATENTSCHRIFT

(11) **EP 4 226 975 B1**
(45) Veröffentlichungstag und Bekanntmachung des Hinweises auf die Patenterteilung: **24.06.2026**
(21) Anmeldenummer: 22156648.2
(22) Anmeldetag: 14.02.2022
(51) Int. Cl.: A62C 3/02, B01D 47/06, B05B 1/20, B05B 7/00, B05B 7/24, F04D 29/60, F04D 29/70, B05B 1/06, B05B 7/08, B05B 7/12

(54) **LÖSCHNEBELWERFER, LÖSCHNEBELWERFERANORDNUNG UND VERFAHREN ZUR LÖSCHMITTELAUSBRINGUNG**
EXTINGUISHING SMOKE PROJECTOR, EXTINGUISHING SMOKE PROJECTOR ASSEMBLY AND METHOD OF DISPENSING EXTINGUISHING AGENT
LANCEUR DE BROUILLARD EXTINCTEUR, DISPOSITIF LANCEUR DE BROUILLARD EXTINCTEUR ET PROCÉDÉ DE DISTRIBUTION D'AGENT EXTINCTEUR

(43) Veröffentlichungstag der Anmeldung: 16.08.2023
(73) Patentinhaber: Minimax Viking Patent Management GmbH, 23840 Bad Oldesloe (DE); EmiControls GmbH, 39100 Bolzano/Bozen (IT)
(72) Erfinder: BAUMANN, Georg, 23840 Bad Oldesloe (DE); PFEIFFER, Stefan, 23840 Bad Oldesloe (DE); MARTENS,Holger, 23840 Bad Oldesloe (DE); GIESEKE, Thorsten, 23840 Bad Oldesloe (DE); GSCHNITZER, Martin, 39049 Sterzing (BZ) (IT)
(74) Vertreter: Eisenführ Speiser

(56) Entgegenhaltungen:
- EP-A1- 2 821 109

## Beschreibung

Die vorliegende Erfindung betrifft einen Löschnebelwerfer, mit einem Löschmittelanschluss zur Anbindung an eine druckbeaufschlagte Löschmittelversorgung, einem relativ zum Löschmittelanschluss um eine Vertikalachse und eine Horizontalachse schwenkbaren Gehäuse mit einer ersten, einlassseitigen, Gehäuseöffnung und einer zweiten, auslassseitigen, Gehäuseöffnung, einem in dem Gehäuse angeordneten Strömungserzeuger, der dazu eingerichtet ist, von der ersten Gehäuseöffnung in Richtung der zweiten Gehäuseöffnung einen Luftstrom bereitzustellen, und einer der zweiten Gehäuseöffnung zugeordneten Löschdüsenanordnung, die fluidleitend mit dem Löschmittelanschluss verbunden und dazu eingerichtet ist, Löschmittel derart abzugeben, dass das Löschmittel von dem Luftstrom erfasst wird.

Löschnebelwerfer der vorbezeichneten Art sind allgemein bekannt. Sie weisen hinsichtlich der Schwenkbarkeit ihrer Löschdüsenanordnung Ähnlichkeiten mit Löschmonitoren auf, die beispielsweise an stationären Feuerlöschanlagen oder auf Löschfahrzeugen, oder Polizeieinsatzfahrzeugen, angebracht werden und in der Lage sind, richtungsgenau über teils hohe Distanzen von deutlich über 50 Meter hinweg große Mengen Löschmittel auszubringen.

Löschnebelwerfer sind dabei dazu eingerichtet, dass zumindest ein Teil des durch die Löschdüsenanordnung abgegebenen Löschmittels zu einem Löschnebel zerstäubt wird, was die Löschwirkung erhöht. Löschnebelwerfer haben gegenüber konventionellen Löschmonitoren weiter das zusätzliche Merkmal des Strömungserzeugers, der durch den in Auslassrichtung gerichteten Luftstrom das von der Löschdüsenanordnung abgegebene Löschmittel erfasst und in Wurfrichtung des Gehäuses zusätzlich austreibt, wobei durch das Erfassen des Löschmittels vom Luftstrom eine höhere Wurfweite und, je nach Anwendungsfall, auch eine weitere Zerstäubung des Löschmittels zu einem Löschnebel erzeugt wird, was die Löschwirkung erhöht.

Löschnebelwerfer der eingangs bezeichneten Art werden auch unter dem Begriff der Löschturbine vertrieben, wenngleich der Antrieb des Strömungserzeugers streng genommen nicht immer nach dem Turbinenprinzip erfolgt, sondern häufig unter Verwendung motorisch, vor allem elektromotorisch, angetriebener Strömungserzeuger wie beispielsweise Ventilatoren.

Für den Einsatz in der Praxis sind bei den Löschnebelwerfern der eingangs bezeichneten Art die erreichbaren Wurfweiten des ausgebrachten Löschmittels, und die dazu nötigen Betriebsdrücke der druckbeaufschlagten Löschmittelversorgung relevante Kenngrößen. Zum Erreichen hoher Wurfweiten von über 50, insbesondere über 60 oder 70 Metern, sind bei bekannten Löschnebelwerfern Betriebsdrücke von deutlich oberhalb 12 bar, insbesondere oberhalb 14 oder sogar 16 bar erforderlich. Während derartige Betriebsdrücke bei stationären Anwendungsfällen des Löschnebelwerfers in der Regel durch vertretbaren Mehraufwand zuverlässig bereitgestellt werden können, stellt dies für mobile Anwendungsfälle eine ungleich größere Herausforderung dar. Für mobile Anwendungsfälle und derart hohe Betriebsdrücke sind fest zugeordnete Einrichtungen zur Löschmittelversorgung, beispielweise permanent angeschlossene Löschmittelpumpen, oft besonders groß und kostenintensiv, und nicht-fest zugeordnete Einrichtungen zur Löschmittelversorgung, beispielsweise bereitgestellt durch Löschfahrzeuge oder in Form von tragbaren Pumpen der Feuerwehr, in der Regel nur so leistungsfähig dimensioniert wie es die originären Anwendungsfälle erfordern.

Es wird angestrebt, die Wurfweite, d. h. maximale Ausbringung von Löschmittel, im Verhältnis zum hierfür erforderlichen Druck der druckbeaufschlagten Löschmittelversorgung zu verbessern.

EP 2 821 109 A1 zeigt einen Nebelwerfer mit einem rohrförmigen Körper, der an einem Ende eine Lufteinlassöffnung und am entgegengesetzten Ende eine Luftauslassöffnung aufweist. Im Bereich der Einlassöffnung ist ein Lüfter zum Erzeugen eines gerichteten Luftstroms angeordnet. Im Bereich der Auslassöffnung ist eine Gruppe von Düsen angeordnet. Im Inneren des rohrförmigen Körpers ist ein Stützkopf für zwei weitere, im rohrförmigen Körper angeordnete Gruppe von Düsen vorgesehen. Jede Gruppe von Düsen wird über jeweils eine Fluidleitung mit Löschfluid versorgt.

Demzufolge lag der Erfindung die Aufgabe zugrunde, die Performance in der Ausbringung von Löschmittel allgemein zu verbessern. Insbesondere lag die Aufgabe zugrunde, einen Löschmittelwerfer der eingangs bezeichneten Art dahingehend zu verbessern, dass die im Stand der Technik aufgefundenen Nachteile möglichst weitgehend überwunden werden. Insbesondere lag der Erfindung die Aufgabe zugrunde, einen Löschmittelwerfer dahingehend zu verbessern, dass der für den Betrieb notwendige Mindestdruck der druckbeaufschlagten Löschmittelversorgung reduziert werden kann, ohne die erreichbare Wurfweite des Löschmittels zu reduzieren, bzw. bei gleichem Druck eine höhere Wurfweite erreichen zu können.

Die Erfindung löst die ihr zugrundliegende Aufgabe, indem sie einen Löschnebelwerfer mit den Merkmalen von Anspruch 1 vorschlägt. Insbesondere schlägt die Erfindung vor, dass die Löschdüsenanordnung wenigstens ein innerhalb des Gehäuses angeordnetes, in einer Wurfrichtung ausgerichtetes Zentralrohr aufweist, das mittels eines Zuleitungsabschnitts fluidleitend mit einer horizontalen und vertikal schwenkbaren Verteilereinrichtung verbunden ist, wobei der Zuleitungsabschnitt mit einem harmonischen Krümmungsverlauf ausgebildet ist. Unter einem harmonischen Krümmungsverlauf wird erfindungsgemäß verstanden, dass der Zuleitungsabschnitt frei von Richtungsänderungen ist, die einen vorbestimmten kritischen Änderungswinkel überschreiten und/oder einen vorbestimmten kritischen Krümmungsradius unterschreiten. Erfindungsgemäß ist der Krümmungsverlauf entweder frei von winkligen Richtungsänderungen und von Krümmungen, oder aber er weist eine Anzahl von winkligen Richtungsänderungen auf, die aber jede für sich einen Änderungswinkel von 45°, vorzugsweise 30°, besonders bevorzugt 15° nicht überschreiten, und/oder eine Anzahl von Krümmungen, die aber jede für sich einen Krümmungsradius vom 0,5-fachen ihrer Nennweite überschreiten, vorzugsweise das 0,7-fache ihrer Nennweite überschreiten, und besonders bevorzugt das 1,0-fache ihrer Nennweite nicht unterschreiten.

Mit anderen Worten wird ein Krümmungsverlauf dann als harmonisch verstanden, wenn er frei von Richtungsänderungen ist oder jedenfalls nur sanfte Richtungsänderungen innerhalb der obigen Parameter aufweist. Richtungsänderungen liegen vorzugsweise nur anhand von Krümmungen mit den vorstehend definierten Radien vor. Die Radien können konstant entlang eines Krümmungsverlaufs sein, sie können sich aber auch progressiv oder degressiv ändern.

Der Zuleitungsabschnitt kann folglich vollständig gerade ausgebildet sein. Er kann vollständig aus gewinkelten oder gekrümmten Segmenten gebildet sein. Er kann ferner auch aus geraden Segmenten und gewinkelten oder gekrümmten Segmenten gebildet sein, sofern die Winkel bzw. Krümmungen innerhalb der obigen Parameterbereiche liegen.

Durch den harmonisch gestalteten Krümmungsverlauf des Zuleitungsabschnittes wird sichergestellt, dass das Löschmittel auf dem gesamten Weg zwischen der Verteilereinrichtung und dem Zentralrohr besser fließen kann, wobei Druckverluste infolge abrupter Umlenkungen vermieden werden können, die sich sonst in einer Verminderung des dynamischen Drucks äußern würden. Beispiele aus dem Stand der Technik, die zu unharmonischen Verläufen von Zuleitungsabschnitten führten, waren beispielsweise T-Verbinder.

Die Erfinder haben erkannt, dass schon durch Elimination solcher störenden Geometrien ein unerwartet positiver Einfluss auf die Ausbringeffizienz des Löschnebelwerfers erzielt werden kann. Der Druckverlust, welcher sich durch die Förderung des Löschmittels vom Löschmittelanschluss bis zum Zentralrohr zwangsläufig ergibt, wird überraschend stark minimiert, wenn der Krümmungsverlauf des Zuleitungsabschnitts harmonisiert ist.

In einer vorteilhaften Weiterbildung der Erfindung ist der Zuleitungsabschnitt aus geraden Rohrabschnitten und/oder bogenförmig gekrümmten Rohrabschnitten gebildet. Mit anderen Worten besteht der Zuleitungsabschnitt ausschließlich aus geraden oder bogenförmig gekrümmten Rohrabschnitten, was eine konstruktiv günstig plan- und fertigbare Umsetzungsmöglichkeit für den harmonischen Krümmungsverlauf darstellt.

Erfindungsgemäß wird unter dem Begriff des Rohres eine Leitung mit im Wesentlichen zylindrischem Innenquerschnitt verstanden, die vorzugsweise metallisch ist, aber auch angepasst an den vorbestimmten Druckbereich aus nichtmetallischen Werkstoffen ausgebildet sein kann, beispielsweise aus Kunststoffen, Verbundwerkstoffen oder einem Materialmix aus verschiedenen Werkstoffen.

In einer weiteren bevorzugten Ausführungsform ist der Zuleitungsabschnitt innerhalb des Gehäuses angeordnet. Es hat sich herausgestellt, dass das Verlegen des Zuleitungsabschnitts in das Innere des Gehäuses des Löschnebelwerfers hinein eine deutlich geringere Beeinträchtigung des Löschmittelaustrags aus dem Löschnebelwerfer nach sich zieht, als zu erwarten war, obwohl der Zuleitungsabschnitt zwangsläufig den freien Querschnitt beeinträchtigt, durch den der vom Strömungserzeuger erzeugte Luftstrom gefördert wird. Somit ermöglicht diese Ausführungsform eine signifikante Verkürzung der Gesamtlänge des Zuleitungsabschnitts von der Verteilereinrichtung bis zum Zentralrohr und damit einhergehend eine Verminderung von Reibungsverlusten. Eine etwaige messtechnisch erfassbare Beeinträchtigung des Luftstroms innerhalb des Gehäuses fällt hierdurch - wenn überhaupt - nur in sehr geringem Maße ins Gewicht.

In einer weiteren bevorzugten Ausführungsform weist der Zuleitungsabschnitt an seinem einlassseitigen Ende einen ersten inneren Leitungsquerschnitt und an seinem auslassseitigen Ende einen zweiten inneren Leitungsquerschnitt auf. Der zweite innere Leitungsquerschnitt ist größer als der erste innere Leitungsquerschnitt oder gleich dem ersten inneren Leitungsquerschnitt.

Zwischen den beiden Enden weist der Zuleitungsabschnitt vorzugsweise einen Querschnittsverlauf auf, der stets größer als der oder gleich dem ersten inneren Leitungsquerschnitt ist. Mit anderen Worten ist der Zuleitungsabschnitt vorzugsweise frei von Querschnittseinschnürungen ausgebildet, sodass auf etwaigen Querschnittsänderungen basierende Strömungswiderstände und das Ausbilden von Turbulenzen weitgehend vermieden werden können. Auch dies wirkt sich auf das Reduzieren von Druckverlusten auf dem Übertragungsweg zwischen dem Löschmittelanschluss und dem Zentralrohr in überraschend großem Ausmaß positiv aus.

Es hat sich herausgestellt, dass es für die Ausbringeffizienz des Löschnebelwerfers insgesamt unschädlich ist, wenn im Zuleitungsabschnitt lokal eine Aufweitung des inneren Querschnitts vorliegt, die ja zwangsläufig an ihrem lokalen Ende auch wieder eine Querschnittsverjüngung zur Folge hätte. Solange der Auslassquerschnitt des Zuleitungsabschnitts gleich groß oder größer als der Einlassquerschnitt ist, und an keiner Stelle geringer als der Einlassquerschnitt, bleibt ein erfindungsgemäß günstiger Druckverlauf gewährleistet.

In einer weiteren bevorzugten Ausführungsform weist der Zuleitungsabschnitt einlassseitig zwei fluidtechnisch parallel verlaufende Rohrsegmente bzw. Rohrsegmentanordnungen auf, die an die Verteilereinrichtung angeschlossen sind, und die auslassseitig bogenförmig und in einer gemeinsamen Richtung, insbesondere in Wurfrichtung, konvergierend ineinander münden. Es hat sich herausgestellt, dass das Aufteilen des Löschmittelstroms in der Verteilereinrichtung in zwei Teilströme verbunden mit dem vorstehend definierten konvergierenden Ineinander-Münden am Zentralrohr eine sehr effiziente Fluidführung für den Anwendungsfall darstellt. Das Aufteilen des Fluidstroms in der Verteilereinrichtung ist vorteilhaft für die mechanische Ausgestaltung der Verteilereinrichtung einerseits und des Zuleitungsabschnitts andererseits, da das Abstützen des Zentralrohrs und des Zuleitungsabschnitts konstruktiv vereinfacht wird. Durch das konvergierende Ineinander-Münden werden die beiden Teilströme des Löschmittels strömungsgünstig ineinander geführt, und ein Aufeinanderprallen der Teilströme wird weitestgehend vermieden. Hierdurch neigt die Löschmittelströmung in der Zuleitung zum Zentralrohr weniger stark zu Turbulenzen, und Kavitationen werden minimiert oder bestenfalls vermieden. Es kommt deutlich weniger ausgeprägt, wenn überhaupt, zu Druckschwankungen und somit auch zu geringeren Druckverlusten. Zudem wird auch die vorstehend definierte Aufteilung des Zuleitungsabschnitts in mehrere parallele Rohrsegmente bzw. Rohrsegmentanordnungen nicht zu einer auf den ersten Blick zu erwartenden negativen Auswirkung auf das Auswurfverhalten insgesamt, obwohl auch diese Aufteilung des Zuleitungsabschnitts in Rohrsegmente innerhalb des Gehäuses, und somit innerhalb des vom Strömungserzeuger erzeugten Luftstromes angeordnet ist.

In einer weiteren bevorzugten Ausführungsform weisen die zwei fluidtechnisch parallel verlaufenden Rohrsegmente bzw. Rohrsegmentanordnungen des Zuleitungsabschnitts dieselbe Leitungslänge auf. Weiter vorzugsweise sind diese Rohrsegmente bzw. Rohrsegmentanordnungen formidentisch ausgebildet, und besonders bevorzugt symmetrisch zueinander ausgebildet. Die Symmetrie liegt vorzugsweise in einer sich in Wurfrichtung erstreckenden Ebene vor, insbesondere einer vertikalen Ebene.

In einer weiteren bevorzugten Ausführungsform weist der Zuleitungsabschnitt, vorzugsweise auslassseitig, ein Absperrorgan auf, das dazu eingerichtet ist, zwischen einer Sperrstellung und einer Freigabestellung hin und her bewegt zu werden, wobei das Absperrorgan in der Sperrstellung den Zuleitungsabschnitt fluiddicht verschließt und in der Freigabestellung freigibt. Das Absperrorgan weist in der Freigabestellung einen Durchlassquerschnitt auf, der gleich dem oder größer ist als der erste innere Leitungsquerschnitt des Zuleitungsabschnitts. Vorzugsweise ist das Absperrorgan als Kugelhahn ausgebildet. Gegenüber anderen Absperrorganen, insbesondere gegenüber Membranventilen, wird hierdurch ein Absperren und Freigeben des Fluidflusses durch das Zentralrohr ermöglicht, das keine Einschnürung des inneren Leitungsquerschnitts des Zuleitungsabschnitts bedingt. Andere Ventile erzeugen regelmäßig eine Einschnürung selbst in vollständiger Offenstellung von 10 % oder mehr, oft sogar von 30 % oder mehr gegenüber dem Leitungsquerschnitt stromaufwärts des Ventils und stromabwärts des Ventils erzeugt, sodass durch die Verwendung des vorstehend beschriebenen Absperrorgans, insbesondere Kugelhahns, ein weiterer Beitrag zur Minimierung von Druckverlusten geschaffen wird.

Zudem belegt ein als Kugelhahn ausgebildetes Absperrorgan wenig freien Querschnitt innerhalb des Gehäuses und stellt dementsprechend eine lediglich geringe Beeinträchtigung des vom Strömungserzeuger erzeugten Luftstroms dar.

In einer weiteren bevorzugten Ausführungsform wird das Absperrorgan fluidtechnisch angesteuert, vorzugsweise mittels eines dedizierten Fluidkreises. Der dedizierte Fluidkreis ist vorzugsweise ein hydraulischer Steuerkreis oder ein pneumatischer Steuerkreis. Sofern es sich um einen hydraulischen Fluidkreis handelt, so ist hierunter ein vom Löschmittel unabhängiger eigenständiger Fluidkreis zu verstehen. So ist beispielsweise aus dem Stand der Technik die Verwendung von wasser-hydraulischen Ansteuerungen bei als Membranventilen ausgebildeten Absperrorganen bekannt, wobei der Steuerkreis fluidleitend mit dem druckbeaufschlagten Löschmittelanschluss in Verbindung stand. Hierbei konnte zwar auf einen dedizierten Fluidkreis verzichtet werden und stattdessen der Löschmittelstrom zur Ansteuerung der Absperrorgane genutzt werden. Allerdings war dann der Steuerdruck und damit das korrekte Funktionieren der Absperrorgane stets abhängig davon, dass auch die Löschmittelversorgung den hierfür erforderlichen Druck erreichte. Andersherum musste die Löschmittelversorgung auch immer mit einem so hohen Druck gefördert werden, dass damit die Absperrorgane angesteuert werden konnten. Durch eine unabhängige Ansteuerung des Absperrorgans von dem Druck im Löschmittelstrom wird sowohl das Betriebsverhalten des Löschwerfers hinsichtlich der Löschmittelförderung verbessert, als auch die Ansteuerung der Absperrorgane, weil beide Einheiten mit dem jeweils für sie idealen Ansteuerdruck angesteuert werden können. Zusätzlich reduziert dies auch die Fehleranfälligkeit des Gesamtsystems.

In einer weiteren bevorzugten Ausführungsform ist dem Zentralrohr auslassseitig ein Anschluss zum Ankoppeln einer ersten Löschdüse zugeordnet. Als Löschdüse wird in einer ersten bevorzugten Variante ein Strahlrohr vorgesehen. Das Strahlrohr kann beispielsweise ein Hohlstrahlrohr oder ein Kombinationsstrahlrohr sein, welches eine Verstelleinrichtung aufweist, die dazu eingerichtet ist, die Wurfcharakteristik des Strahlrohrs zwischen einer ersten, auf maximale Wurfweite hin optimierten Endstellung und einer zweiten, auf maximale Sprühverteilung des Löschmittels konfigurierten Endstellung hin und her geschaltet werden kann. Bei Verwendung von Schaumzusatz im Löschmittel kann in den Zwischenstellungen und in der Endstellung auch Löschschaum gebildet werden. Vorzugsweise ist die Einstelleinrichtung mit einer Schnittstelle zum Ansteuern von extern versehen, wobei die Schnittstelle beispielsweise eine elektrische Schnittstelle zur kabelgebundenen oder kabellosen Fernübertragung sein kann.

Mit anderen Worten weist die erste Löschdüse also Einstellmittel zum Justieren des Sprühbildes zwischen einer ersten, fokussierten Endstellung und einer zweiten, aufgeweiteten Endstellung auf, wobei die Einstellmittel vorzugsweise pneumatisch, hydraulisch oder elektrisch angesteuert sind. Die fokussierte Endstellung findet beispielsweise Anwendung, wenn der Löschnebelwerfer durch das Zentralrohr eine besonders hohe Wurfweite erreichen soll, oder wenn das Löschmittel mit besonders gebündelter kinetischer Energie auf ein Objekt geworfen werden soll. Die aufgeweitete Endstellung findet beispielsweise Anwendung, wenn mittels eines möglichst diffusen Sprühbildes Bereiche vor der Ausbreitung eines Feuers geschützt werden sollen, oder Schaum gebildet werden soll. Die aufgeweitete Endstellung kann daher auch als Riegelstellung oder Schaumstellung bezeichnet werden. Die Einstellung zwischen den Endstellungen erfolgt in bevorzugten Ausführungsformen stufenlos, wobei vorzugsweise die Einstellmittel mit einer Programmierlogik wirkverbunden sind, welche von extern ansteuerbar ist, wobei die Programmierlogik dazu eingerichtet ist, als Funktion eines erhaltenen Stellbefehls die Einstellmittel zum Einnehmen einer für den Stellbefehl repräsentativen Stellung anzusteuern. Zu einem gewissen Grad kann auch in diesen Stellungen Schaum gebildet werden.

In einer weiteren bevorzugten Ausführungsform weist die Löschdüsenanordnung einen Düsenkranz auf, welcher sich umfänglich, vorzugsweise auf der Innenseite, an der Düsenöffnung entlang erstreckt, wobei der Düsenkranz mehrere entlang eines Umfangs des Düsenkranzes angeordnete, vorzugsweise zweite, Löschdüsen aufweist, die ihrerseits zum Erzeugen und Abgeben eines Löschmittel-Sprühnebels derart eingerichtet sind, dass der Löschmittel-Sprühnebel von dem erzeugten Luftstrom in Wurfrichtung erfasst wird.

In bevorzugten Ausführungsformen sind eine, mehrere oder sämtliche der Löschdüsen als Kegeldüsen ausgeführt. Die Kegeldüsen können Hohlkegeldüsen oder Vollkegeldüsen sein, wobei besonders bevorzugt Vollkegeldüsen verwendet werden. Vorzugsweise werden Vollkegeldüsen mit jeweils einer einzelnen Auslassöffnung verwendet.

Die Löschdüsen weisen vorzugsweise bei einem Druck von 5 bar an der Düse einen Durchfluss von 13 I/min oder mehr auf, weiter vorzugsweise 15 I/min oder mehr, weiter vorzugsweise 18 I/min oder mehr, und besonders bevorzugt 22 I/min oder mehr.

Die Löschdüsen weisen vorzugsweise bei einem Druck von 10 bar an der Düse einen Durchfluss von 18 I/min oder mehr auf, weiter vorzugsweise 21 I/min oder mehr, weiter vorzugsweise 25 I/min oder mehr, und besonders bevorzugt 32 I/min oder mehr.

Die Löschdüsen weisen bei Ausbildung als Kegeldüsen vorzugsweise einen Sprühkegelwinkel in einem Bereich von 60° bis 120° auf, vorzugsweise einen Sprühkegelwinkel von 90°.

Vorzugsweise ist das von den Düsen des Düsenkranzes abgegebene Löschmittel zumindest partiell in Richtung einer Mittenachse der Düsenöffnung gerichtet, sodass das Erfassen des Sprühnebels durch den erzeugten Luftstrom vereinfacht wird. Der vom Strömungserzeuger erzeugte Luftstrom sorgt für eine höhere Wurfweite des Sprühnebels einerseits, und für eine zusätzliche weitere Zerstäubung andererseits. Sofern hier vorstehend von "zweiten" Löschdüsen die Rede ist, so soll verstanden werden, dass jene Löschdüsen des Düsenkranzes einerseits grundsätzlich eigenständige, für die Verwendung am Düsenkranz optimierte Löschdüsen sein können, andererseits aber auch identisch zu den weiter vorstehend beschriebenen zweiten Löschdüsen sein können. Auch die zweiten Löschdüsen sorgen bei Verwendung von Schaumzusatz für eine Schaumbildung am Düsenaustritt.

In einer weiteren bevorzugten Ausführungsform ist der Düsenkranz mittels eines zweiten Zuleitungsabschnitts fluidleitend mit der Verteilereinrichtung verbunden, wobei der zweite Zuleitungsabschnitt - wie auch der erste Zuleitungsabschnitt - erfindungsgemäß mit einem harmonischen Krümmungsverlauf ausgebildet ist. Die Ausbildung des Zuleitungsabschnitts ist vorzugsweise nach denselben Grundsätzen vorgenommen wie vorstehend bereits beim ersten Zuleitungsabschnitt beschrieben, sodass hinsichtlich der obigen Definition des harmonischen Krümmungsverlaufs und der Erstreckung des zweiten Zuleitungsabschnitt auf die vorstehenden Ausführungen zum ersten Zuleitungsabschnitt zur Vermeidung von Wiederholungen verwiesen wird.

Auch der zweite Zuleitungsabschnitt ist vorzugsweise aus geraden und/oder bogenförmig gekrümmten Rohrabschnitten gebildet.

Vorzugsweise weist der zweite Zuleitungsabschnitt an seinem einlassseitigen Ende einen ersten inneren Leitungsquerschnitt auf, an seinem auslassseitigen Ende einen zweiten inneren Leitungsquerschnitt, der größer als der oder gleich dem ersten inneren Leitungsquerschnitt ist, und zwischen diesen beiden Enden einen Querschnittsverlauf, der stets größer als der oder gleich dem ersten inneren Leitungsquerschnitt ist.

In einer weiteren bevorzugten Ausführungsform weist der zweite Zuleitungsabschnitt, vorzugsweise auslassseitig, ein Absperrorgan auf, das dazu eingerichtet ist, zwischen einer Sperrstellung und einer Freigabestellung hin und her bewegt zu werden. In der Sperrstellung verschließt das Absperrorgan den zweiten Zuleitungsabschnitt fluiddicht, und gibt ihn in der Freigabestellung frei, wobei das Absperrorgan in der Freigabestellung weiter bevorzugt einen Durchlassquerschnitt aufweist, der gleich dem oder größer als der erste innere Leitungsquerschnitt des Zuleitungsabschnitts ist. Auch das Absperrorgan für den zweiten Zuleitungsabschnitt ist vorzugsweise als Kugelhahn ausgebildet und weiter vorzugsweise extern ansteuerbar, beispielsweise mittels eines dedizierten Fluidkreislaufs, und/oder mittels desselben Kreislaufs wie das Absperrorgan des ersten Zuleitungsabschnitts. Sofern derselbe Fluidkreislauf verwendet wird, sind vorzugsweise entsprechende Vorsteuerleitungen und/oder Vorsteuerventile vorgesehen.

In einer weiteren bevorzugten Ausführungsform ist das Gehäuse zum Ausführen der Bewegung um die Horizontalachse mit einem oder mehreren fluidtechnisch betätigten Hubzylindern wirkverbunden, wobei der oder die Hubzylinder dazu eingerichtet ist bzw. sind, das Gehäuse zwischen einer aufwärts geneigten Endstellung und einer abwärts geneigten Endstellung hin und her zu schwenken, wobei vorzugsweise die Hubzylinder derart ausgerichtet sind, dass sie in der aufwärts geneigten Endstellung weiter eingefahren sind als in der abwärts geneigten Endstellung, insbesondere vollständig eingefahren in der aufwärts geneigten Endstellung und vollständig ausgefahren in der abwärts geneigten Endstellung.

Die Erfindung ist vorstehend unter Bezugnahme auf einen Löschnebelwerfer in einem ersten Aspekt beschrieben worden. In einem zweiten Aspekt betrifft die Erfindung ferner eine mobile Löschnebelwerferanordnung, mit einem Transportrahmen, insbesondere einem Absetz- oder Abrollrahmen, der Befestigungsmittel zum temporären Anordnen des Transportrahmens auf einer Ladefläche eines Fahrzeugs zu Transportzwecken aufweist, und einem auf dem Transportrahmen befestigten Löschnebelwerfer, wobei der Löschnebelwerfer nach einer der vorstehend beschriebenen bevorzugten Ausführungsformen ausgebildet ist.

Aus dem Stand der Technik sind bereits mobile Löschnebelwerferanordnungen bekannt, die beispielsweise einen Löschnebelwerfer gemäß der eingangs bezeichneten Art auf einem Anhänger vorschlagen. Die Anordnung des Löschnebelwerfers auf einem Transportrahmen erweitert aber die möglichen Anwendungsgebiete und vor allem die Transportmöglichkeiten enorm, da der Transportrahmen flexibel konfektioniert und für die verschiedensten Transportfahrzeuge nutzbar gemacht werden kann, was weit über die Verwendung eines bloßen Anhängers hinausgeht. So ist der Transportrahmen vorzugsweise als 20-Fuß- oder 40-Fuß-Seecontainer-Format ausgebildet, und/oder zur Aufnahme auf einem Lastkraftfahrzeug vorbereitet. Als Absetzrahmen ist die mobile Löschnebelwerferanordnung vorzugsweise kranbar ausgeführt, weist also eine oder mehrere Hakenaufnahmen zum Erfassen von Krangeschirr auf. Alternativ ist die mobile Löschnebelwerferanordnung vorzugsweise mit einem Transportrahmen eines Abrollbehältersystems ausgebildet, der ebenfalls vorzugsweise eine Hakenaufnahme zur temporären Aufnahme auf der Ladefläche des Lastkraftfahrzeugs aufweist.

In bevorzugten weiteren Ausführungsformen weist die mobile Löschnebelwerferanordnung eine, mehrere oder sämtliche der folgenden Ausgestaltungen auf:
- auf dem Transportrahmen ist ein Generator zur Erzeugung elektrischer Energie installiert und mit dem Löschnebelwerfer zu dessen Energieversorgung, insbesondere zur Energieversorgung des Strömungserzeugers, wirkverbunden;
- auf dem auf dem Transportrahmen ist ein Löschmittelreservoir installiert, wobei vorzugsweise dem Löschmittelreservoir ein oder mehrere Anschlüsse zum Einleiten von Löschmittel in das Reservoir zugeordnet sind, weiter vorzugsweise beiderseits seitlich bezogen auf eine Längsachse des Transportrahmens;
- auf dem Transportrahmen ist eine Pumpeinrichtung installiert, welche einlassseitig mit dem Löschmittelreservoir und auslassseitig mit dem Löschmittelanschluss des Löschnebelwerfers verbunden und dazu eingerichtet ist, den Löschnebelwerfer mit druckbeaufschlagtem Löschmittel zu versorgen;
- auf dem Transportrahmen ist bzw. sind ein oder mehrere Anschlüsse zum jeweiligen Zuführen von druckbeaufschlagtem Löschmittel zu dem Löschnebelwerfer von einer extern anschließbaren Pumpeinrichtung angeordnet, weiter vorzugsweise beiderseits seitlich bezogen auf eine Längsachse des Transportrahmens;
- auf dem Transportrahmen ist eine Schmutzfangeinrichtung, vorzugsweise stromaufwärts der Pumpeinrichtung, angeordnet, fluidleitend mit dem Löschmittelanschluss des Löschnebelwerfers verbunden und dazu eingerichtet, Schmutzpartikel aus dem Löschmittel abzuscheiden.

Die Erfindung ist vorstehend unter Bezugnahme auf den Löschnebelwerfer selbst beschrieben worden. In einem weiteren Aspekt betrifft die Erfindung ein Verfahren zur Löschmittelausbringung, insbesondere zu Lösch- und/oder Kühlzwecken.

Die Erfindung löst die eingangs bezeichnete Aufgabe einer verbesserten Performance bei der Löschmittelausbringung bei einer Löschdüsenanordnung, die ein Zentralrohr und eine dem Zentralrohr zugeordnete Löschdüse aufweist, indem das Verfahren die Schritte umfasst:
Bereitstellen eines druckbeaufschlagten Löschmittels, Fördern des druckbeaufschlagten Löschmittels zu der Löschdüse, und Ausbringen des druckbeaufschlagten Löschmittels aus der Löschdüse, wobei der Schritt des Förderns ein Durchleiten des druckbeaufschlagten Löschmittels durch einen stromaufwärts benachbart zum Zentralrohr angeordneten Zuleitungsabschnitt erfolgt, welcher mit einem harmonischen Krümmungsverlauf ausgebildet ist, wobei der Krümmungsverlauf entweder frei von winkligen Richtungsänderungen und von Krümmungen ist, oder aber eine Anzahl von winkligen Richtungsänderungen aufweist, die aber jede für sich einen Änderungswinkel von 45°, vorzugsweise 30°, besonders bevorzugt 15° nicht überschreiten, und/oder eine Anzahl von Krümmungen, die aber jede für sich einen Krümmungsradius vom 0,5-fachen ihrer Nennweite überschreiten, vorzugsweise das 0,7-fache ihrer Nennweite überschreiten, und besonders bevorzugt das 1,0-fache ihrer Nennweite nicht unterschreiten.

Für die Ausübung des Verfahrens wird in bevorzugten Ausführungsformen ein Löschnebelwerfer mit dem Zuleitungsabschnitt verwendet, der mit den Merkmalen der vorstehend beschriebenen bevorzugten Ausführungsformen ausgebildet ist. Insbesondere wird ein Löschnebelwerfer oder eine Löschnebelwerferanordnung gemäß einer der vorstehend beschriebenen Ausführungsformen verwendet.

Das erfindungsgemäße Verfahren macht sich die gleichen Vorteile zunutze wie der erfindungsgemäße Löschnebelwerfer und die Löschnebelwerferanordnung. Bevorzugte Ausführungsformen des Löschnebelwerfers und der Löschnebelwerferanordnung sind zugleich bevorzugte Ausführungsformen des Verfahrens und umgekehrt, weshalb zur Vermeidung von Wiederholungen insoweit auf die vorstehenden Ausführungen verwiesen wird.

Die Erfindung wird nachfolgend unter Bezugnahme auf die beigefügten Figuren anhand eines bevorzugten Ausführungsbeispiels näher beschrieben. Hierbei zeigen:
- Fig. 1 - 3: verschiedene Seitenansichten eines Löschnebelwerfers nach einem bevorzugten Ausführungsbeispiel,
- Fig. 4, 5: verschiedene Seitenansichten einer in den Löschnebelwerfer der Fig. 1 - 3 integrierten Fluidführung,
- Fig. 6a - 6c: verschiedene räumliche Ansichten eines Teils der Fluidführung gemäß Fig. 4 - 5,
- Fig. 7: ein hydraulisches Fließschema für die Fluidführung gemäß den Fig. 4, 5,
- Fig. 8: eine räumliche, schematische Darstellung einer mobilen Löschnebelwerferanordnung mit einem Löschnebelwerfer gemäß dem bevorzugten Ausführungsbeispiel,
- Fig. 9: eine tabellarische Auswertung des Betriebs des Löschnebelwerfers gemäß den Fig. 1 - 8; und
- Fig. 10, 11: grafische Darstellungen der Tabelle gemäß Fig. 9.

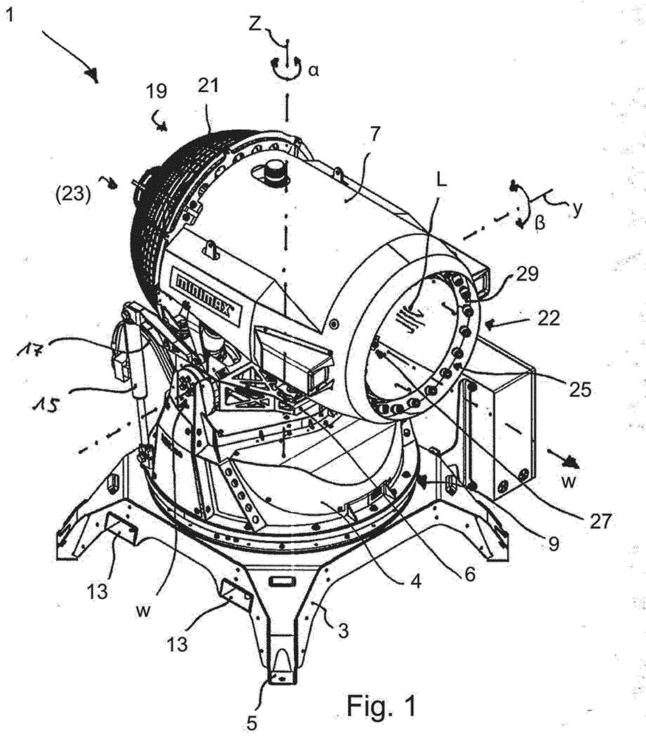

In Fig. 1 ist ein Löschnebelwerfer 1 gemäß einem bevorzugten Ausführungsbeispiel der Erfindung dargestellt. Der Löschnebelwerfer 1 weist eine Tragstruktur 3 mit mehreren seitlich ausgestellten Stützfüßen 5 auf. Auf der Tragstruktur 3 ist eine Gehäusebasis 4 angeordnet. Die Gehäusebasis 4 ist dazu eingerichtet, um eine Vertikalachse Z in einem Winkel α verschwenkt zu werden. Vorzugsweise liegt der Wert α ausgehend von einer Neutralstellung, der sogenannten 0°-Ausrichtung, in einem Bereich von 180° bis +180°, so dass zu beiden Seiten eine Halbkreisverschwenkung möglich ist und das gesamte Umfeld des Löschnebelwerfers abgedeckt werden kann. Der Antrieb der Verschwenkung um die Vertikalachse Z wird vorzugsweise mittels eines hydraulischen Antriebs mit Drehkranz realisiert.

Oberhalb der Gehäusebasis 4 weist der Löschnebelwerfer 1 eine Stützstruktur 6 auf, der an der Gehäusebasis 4 gelagert ist und dazu eingerichtet ist, um eine Horizontalachse Y in einem Winkelbereich β verschwenkt zu werden, wobei der Winkelbereich von β vorzugsweise einen Winkelbereich von 45° oder mehr, vorzugsweise 60° oder mehr umspannt. Besonders bevorzugt ist die Stützstruktur6 ausgehend von einer Horizontallage um 15° oder mehr in eine erste Richtung verschwenkbar (Abwärtsrichtung), und um 30° oder mehr, vorzugsweise 40° oder mehr in eine entgegengesetzte zweite Richtung schwenkbar (Aufwärtsrichtung).

Die Gehäusebasis 4 ist vorzugsweise mittels einer Drehverbindung 9 an der Tragstruktur 3 drehbar gelagert.

Die Stützstruktur 6 ist vorzugsweise ebenfalls mittels einer Drehverbindung 11 an der Gehäusebasis 4 gelagert.

Die Tragstruktur 3 weist an wenigstens einer Seite des Löschnebelwerfers 1 ein paar Staplertaschen 13 auf, die ein Anheben und Transportieren des Löschnebelwerfers ermöglichen.

Zum Auslenken der Stützstruktur 6 relativ zur Gehäusebasis 4 weist der Löschnebelwerfer 1 einen oder mehrere Hubzylinder 15 auf, die mit einem Ausleger 17 der Stützstruktur 6 wirkverbunden sind.

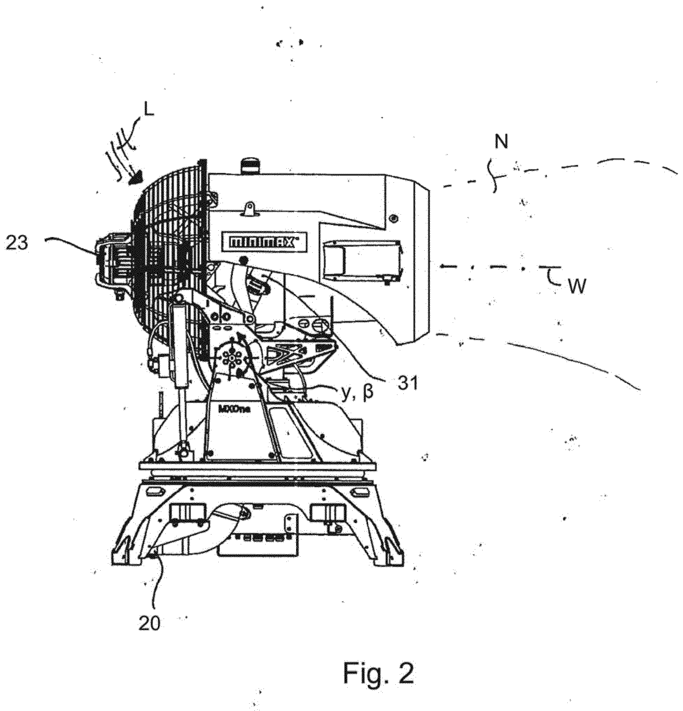

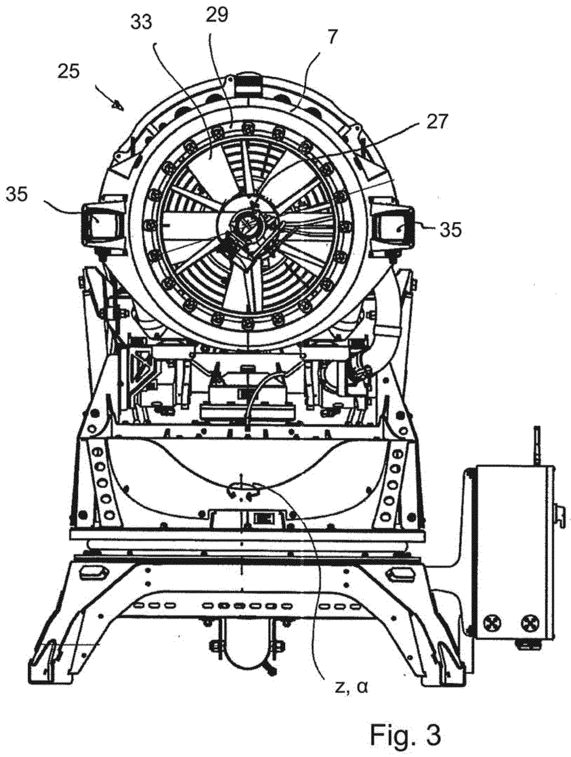

Der Löschnebelwerfer 1 weist ein auf der Stützstruktur befestigtes Gehäuse 7 zur Löschmittelausbringung auf. Das Gehäuse 7 weist eine rückseitig angeordnete erste Gehäuseöffnung 19 auf und eine gegenüberliegend angeordnete, vorderseitige zweite Gehäuseöffnung 22. An der ersten Gehäuseöffnung 19 ist ein Schutzgitter 21. Ebenfalls im Bereich der ersten Gehäuseöffnung 19 weist der Löschnebelwerfer 1 einen Strömungserzeuger 23 auf, vgl. insbesondere Fig. 2, 3. Der Strömungserzeuger 23 ist dazu eingerichtet, von der ersten Gehäuseöffnung 19 Luft anzusaugen, und in Richtung der zweiten Gehäuseöffnung 22 aus dem Gehäuse 7 auszublasen und dadurch einen Luftstrom L bereitzustellen. Die erste Gehäuseöffnung 19 ist mit anderen Worten eine LuftEinlassöffnung, während die zweite Gehäuseöffnung 22 eine Luft-Auslassöffnung ist. Allerdings wird aus der zweiten Gehäuseöffnung 22 nicht ausschließlich Luft ausgeblasen. Im Bereich der zweiten Gehäuseöffnung 22 ist eine Löschdüsenanordnung 25 angeordnet, die dazu eingerichtet ist, Löschmittel derart abzugeben, dass das Löschmittel von dem Luftstrom L erfasst wird.

Die Löschdüsenanordnung 25 weist ein im Inneren des Gehäuses 7, vorzugsweise zentral im Strömungskanal für den Luftstrom L, angeordnetes Zentralrohr 27 auf. Das Zentralrohr 27 ist in einer Wurfrichtung W ausgerichtet und dazu eingerichtet, Löschmittel in der Wurfrichtung W abzugeben. Nach dem Verlassen des Zentralrohrs 27 wird das Löschmittel aus der zweiten Gehäuseöffnung 23 heraus abgegeben und auf einer Wurfbahn vom Löschmittelwerfer 1 abgegeben, wobei es vom Luftstrom L erfasst wird, nachdem das Löschmittel das Zentralrohr 27 verlässt.

Zusätzlich weist die Löschdüsenanordnung 25 einen Düsenkranz 29 auf, der zusätzlich dazu eingerichtet ist, feinversprühtes Löschmittel abzugeben, welches ebenfalls vom Luftstrom L erfasst und in Wurfrichtung W als Löschnebel N abgegeben zu werden, siehe Fig. 2.

Die Zuführung des Löschmittels zu der Löschdüsenanordnung erfolgt über einen in Fig. 2 gezeigten Löschmittelanschluss 20 über einen Strömungspfad 31, siehe Fig. 2 zu dem Zentralrohr 27 und dem Düsenkranz 29.

Wie sich insbesondere in Fig. 3 gut erkennen lässt, weist der Strömungserzeuger 23 eine Anzahl von Rotorblättern 33 auf, die dazu eingerichtet sind, den Luftstrom L im inneren des Gehäuses 7 zu erzeugen und das Löschmittel, was vom Zentralrohr 27 und dem Düsenkranz 29 abgesondert wird, zu erfassen und zu beschleunigen.

Außen am Gehäuse 7 des Löschnebelwerfers 1 sind vorzugsweise ein oder mehrere Leuchtmittel 35, beispielsweise LED-Strahler, angeordnet, um das Löschfeld in Wurfrichtung W ausleuchten zu können.

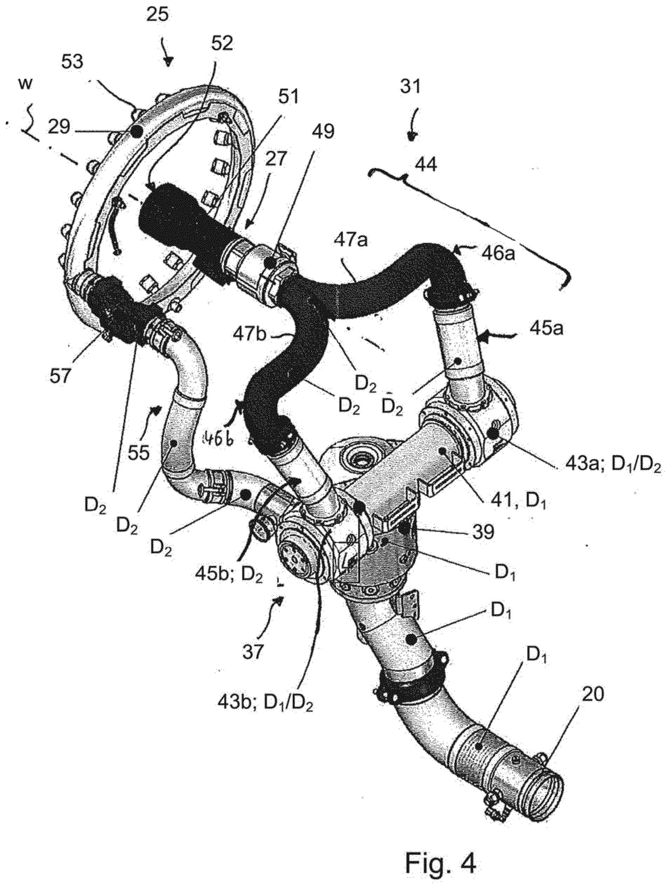

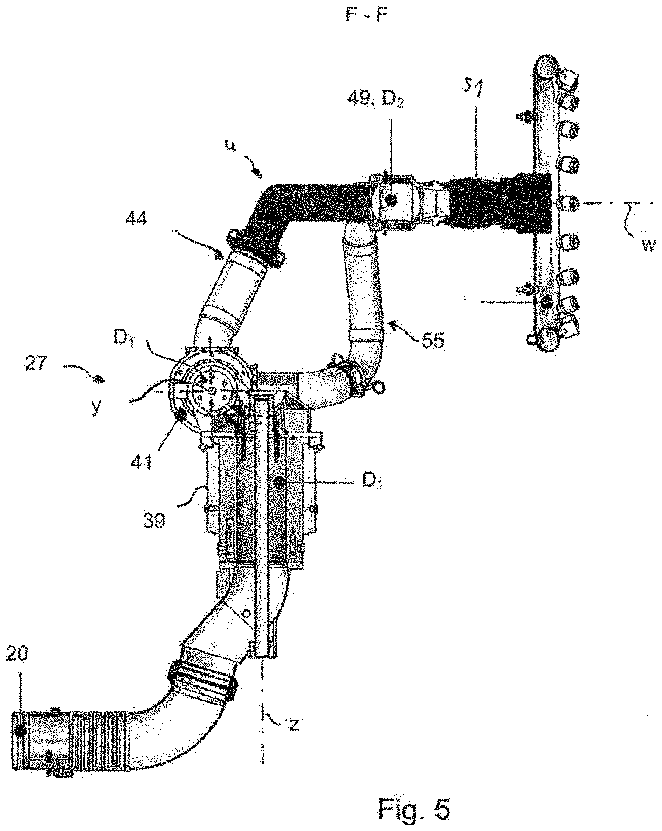

Die Fluidführung ist mit weiteren Details in den Fig. 4 und 5 dargestellt.

Ausgehend vom Löschmittelanschluss 20 gelangt druckbeaufschlagtes Löschmittel im Strömungspfad 31 zunächst über mehrere Rohrsegmente mit einer ersten Nennweite D₁ in eine horizontal und vertikal schwenkbare Verteilereinrichtung 37. Die Verteilereinrichtung 37 weist einen ersten, vertikalen Abschnitt 39, mit einer um die vertikale Achse Z schwenkbaren Drehdurchführung, welcher der Schnittstelle zwischen Tragstruktur 3 und Gehäusebasis 4 funktional zugeordnet ist, und einen zweiten, horizontalen Abschnitt 41, der eine um eine Horizontalachse schwenkbare Drehdurchführung 43a, 43b aufweist und der Schnittstelle zwischen der Tragstruktur 6 und der Gehäusebasis 4 zugeordnet ist, auf. Die Verteilerabschnitte 39, 41 der Verteilereinrichtung 37 weisen vorzugsweise ebenfalls dieselben erste Nennweite D₁ auf wie der stromaufwärtsliegende Teil des Strömungspfads 31.

Die erste Nennweite D₁ liegt vorzugsweise in einem Bereich von DN100 oder größer, weiter vorzugsweise in einem Bereich von DN 125 oder größer. Im Bereich der Drehdurchführung 43 ist vorzugsweise ein Durchmesserübergang von der ersten Nennweite D₁ auf eine geringere zweite Nennweite D₂ ausgebildet ist. Die zweite Nennweite D₂ liegt vorzugsweise in einem Bereich von unterhalb DN 100, vorzugsweise in einem Bereich von DN 80 oder darunter.

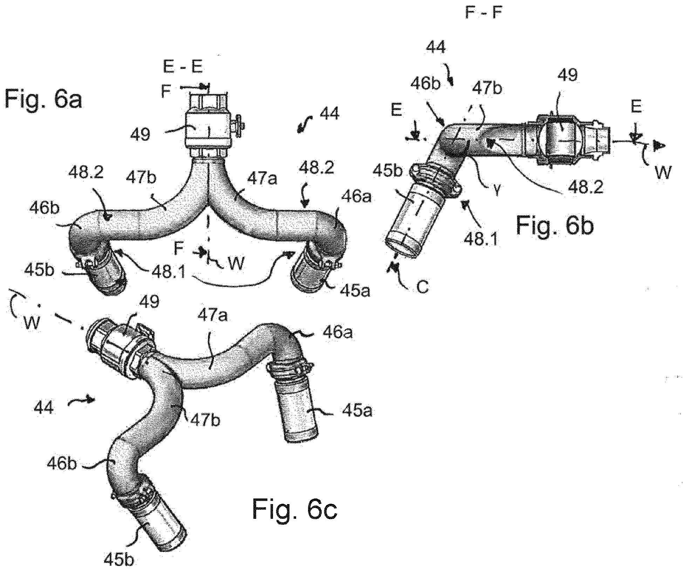

Von der Verteilereinrichtung 37 bis zum Zentralrohr 27 erstreckt sich ein erster Zuleitungsabschnitt 44. Der Zuleitungsabschnitt 44 ist im Detail auch in den Figuren 6a, 6b und 6c in verschiedenen Perspektiven dargestellt. Der erste Zuleitungsabschnitt 44 aus einer Abfolge, d.h. aufeinanderfolgende Anordnung, von geraden Rohrsegmenten 45a, 45b und bogenförmig gekrümmten Rohrsegmenten 46a, 46b und 47a, 47b gebildet, die mit einem harmonischen Krümmungsverlauf das Löschmittel von der Verteilereinrichtung 37 zum Zentralrohr 27 führen. Vorzugsweise ist stromaufwärts vom, insbesondere benachbart zum, Zentralrohr 27 ein erstes Absperrorgan 49 angeordnet, welches besonders bevorzugt als Kugelhahn ausgebildet ist.

Die Rohrsegmente im ersten Zuleitungsabschnitt 44 weisen sowohl in den geraden Rohrsegmenten 45a, 45b als auch in den bogenförmig gekrümmten Rohrsegmenten 46a, 46b, 47a, 47b durchgängig mindestens die zweite Nennweite D₂ auf. Auch das Absperrorgan 49 weist vorzugsweise in seiner Offenstellung die Durchflussnennweite D₂ auf. Dadurch wird sichergestellt, dass im gesamten ersten Zuleitungsabschnitt 44 vom einlassseitigen Ende an der Verteilereinrichtung 37 bis zum auslassseitigen Ende am Zentralrohr 27 stets zumindest die der innere Leitungsquerschnitt mit der Nennweite D₂ bereitgestellt wird.

Wie sich aus Fig. 4, 5 und 6a-6c anschaulich ergibt, sind im Zuleitungsabschnitt 44 auslassseitig, stromaufwärts benachbart vom Absperrorgan 49, die beiden gekrümmten Rohrsegmente 47a, 47b symmetrisch ausgebildet. Vorzugsweise ist der gesamte Zuleitungsabschnitt aus zwei symmetrischen Segmentverläufen bzw. Segmentanordnungen 45, 46 47 (a und b) gebildet, die jeweils an die Verteilereinrichtung 37, insbesondere an den horizontalen Verteilerabschnitt 41 angeschlossen sind. Die auslassseitigen Rohrsegmente 47a, 47b liegen in einer gemeinsamen Ebene E und münden bogenförmig und in eine gemeinsame Richtung, nämlich vorzugsweise in Wurfrichtung W, konvergierend ineinander.

Auf diese Weise werden die Teilströme im ersten Zuleitungsabschnitt 44 tangential zueinander geführt. Die Aufteilung in zwei Fluidströme sorgt für eine bessere Kraftverteilung im mechanischen Aufbau der Fluidführung des Strömungspfads 31. Dadurch, dass das Fluid in zwei Teilströmen von der Verteilerleitung 37 zum Zentralrohr 27 hingeführt wird, bleibt ein vergleichsweise großer freier Querschnitt innerhalb des Gehäuses 7, um eine zufriedenstellende Strömung des Luftstroms L zu gewährleisten.

Die Ebene E ist in einer Neutralstellung des Gehäuses vorzugsweise horizontal ausgerichtet.

Die von der Verteileinrichtung 37 abgehenden Rohrsegmente 45a, 45b liegen in einer gemeinsamen Ebene C. Die gekrümmten Rohrsegmente 46a, 46b sind mit ihrem einlassseitigen Ende 48.1 in Richtung der Ebene C ausgerichtet, und mit ihrem auslassseitigen Ende 48.2 in Richtung der Ebene E. Die beiden Ebenen C, E des Zuleitungsabschnitts 44 spannen miteinander einen Winkel γ auf. Die Gerade, welche im Schnitt der beiden Ebenen C, E liegt, ist vorzugsweise orthogonal zur Wurfrichtung W ausgerichtet, und/oder ist eine Normale zur Ebene F, und/oder ist parallel zur Achse Y ausgerichtet.

Die Segmentanordnungen 45-47 des Zuleitungsabschnitts 44 sind vorzugsweise spiegelsymmetrisch zu einer Symmetrie-Ebene F, welche orthogonal auf der Ebene E steht. Die Achse, welche die Wurfrichtung W charakterisiert, liegt insbesondere im Schnitt der Ebenen E und F.

In dem Ausführungsbeispiel in den Fig. 4 und 5 ist an das Zentralrohr 27 eine erste Löschdüse 51 angeschlossen. Die erste Löschdüse 51 ist vorzugsweise als Mehrzweckstrahlrohr konfiguriert, und von extern zum Einstellen des Sprühbildes ansteuerbar. Das Sprühbild der ersten Löschdüse 51 kann auf diese Weise zwischen einer ersten Stellung mit maximaler Sprühverteilwirkung und einer zweiten Stellung mit einer maximalen Wurfweitenwirkung eingestellt werden, entweder in Stufen oder stufenlos.

Je nachdem, wie die Einstellung an der Löschdüse 51 vorgenommen wird, kann durch deren Löschdüsenöffnung 52 also entweder Löschmittel mit maximaler Wurfweite ausgegeben werden, oder mit maximaler Sprühverteilwirkung, d. h. möglichst diffusen Löschmittelaustragverhalten, oder in Zwischenstellungen eine Mischform dieser beiden Wirkungen.

Der Strömungspfad 31 weist ferner einen zweiten Zuleitungsabschnitt 55 auf, der einer der beiden Drehdurchführungen 43 angeschlossen ist, in Fig. 4 links, und sich von der Verteilereinrichtung 37 durchgehend bis zum Düsenkranz 29 erstreckt. Auch der zweite Zuleitungsabschnitt 55 ist mit einem harmonischen Krümmungsverlauf ausgebildet und besteht aus geraden und bogenförmig gekrümmten Rohrsegmenten. Weiter vorzugsweise weisen auch die Rohrsegmente des zweiten Zuleitungsabschnitts 55 durchgängig mindestens die zweite Nennweite D₂ auf. Durch den hinsichtlich Durchmesser und Krümmung harmonischen Verlauf der beiden Zuleitungsabschnitte 44, 55 wird ein besonders vorteilhafter Löschmitteltransport mit geringem Druckverlust und guten Austragverhalten erreicht.

Auslassseitig ist am zweiten Zuleitungsabschnitt 55 ein zweites Absperrorgan 57 angeordnet, welches vorzugsweise ebenfalls die Durchlass-Nennweite D₂ aufweist. Das zweite Absperrorgan 57 ist im vorliegenden Ausführungsbeispiel der Fig. 4 und 5 als Membranventil ausgebildet, es soll aber verstanden werden, dass alternativ zur Verwendung des Membranventils an dieser Stelle genau wie im ersten Zuleitungsabschnitt 44 ein Kugelhahn eingesetzt werden kann und auch soll. Der zweite Zuleitungsabschnitt 55 versorgt den Düsenkranz 29 mit Löschfluid, und das Löschfluid wird im Düsenkrank durch eine Mehrzahl von, vorzugsweise gleichmäßig, entlang des Umfangs des Düsenkranzes 29 verteilt angeordneten zweiten Löschdüsen 53 abgegeben. Die zweiten Löschdüsen 53 sind vorzugsweise als Sprühnebeldüsen der im allgemeinen Teil beschriebenen Art ausgebildet, wobei zur Vermeidung von Wiederholungen auf die obigen Ausführungen verwiesen wird.

Sofern vorstehend und nachfolgend von Wurfrichtung gesprochen wird, so ist hierunter die Ausrichtung der Löschdüsenanordnung 25 zu verstehen. Es ist unter Schwerkrafteinfluss und unter Windeinfluss selbstverständlich so, dass sich das Löschmittel nach Verlassen der jeweiligen Löschdüsen 51, 53 nicht perfekt linear ausbreitet, sondern einer Trajektorie folgt, die von der Schwerkraft in Richtung Erdboden abgelenkt wird, und zusätzlich vom Wind horizontal und/oder vertikal beeinflusst werden kann.

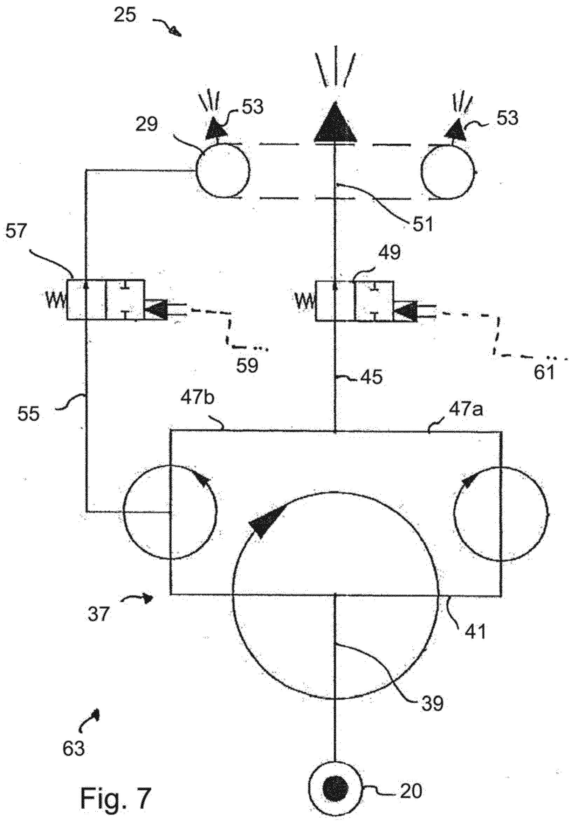

Wie sich anschaulich ferner aus Fig. 7 ergibt, können sowohl das erste Absperrorgan 49 wie auch das zweite Absperrorgan 57 von extern angesteuert werden. Vorzugsweise sind eines oder beide der Absperrorgane 49, 57 als fluidgesteuerte Ventile ausgebildet, besonders bevorzugt als Hydraulikventile. Das erste Absperrorgan 49 ist mittels einer Steuerleitung 61 mit einem Steuerkreislauf verbunden, und das zweite Absperrorgan 57 ist mit einer zweiten Steuerleitung 59 mit dem selben oder einem eigenen Fluidkreislauf zur Ansteuerung verbunden. Die Fluidkreisläufe für die Steuerleitungen 59, 61 sind besonders bevorzugt getrennt und unabhängig vom druckbeaufschlagten Löschmittel, um einerseits mit einem für die Absperrorgane 49, 57 ideal abgestimmten Steuerdruck angesteuert zu werden, der sich vom Fluiddruck des Löschmittels signifikant unterscheiden kann, und um zum anderen Kontaminationen des Strömungspfads 31 auszuschließen. Alternativ zur Verwendung von Hydraulik als Steuermedium sind beispielsweise auch pragmatische oder elektrische Systeme denkbar, genauso wie elektropneumatische Systeme.

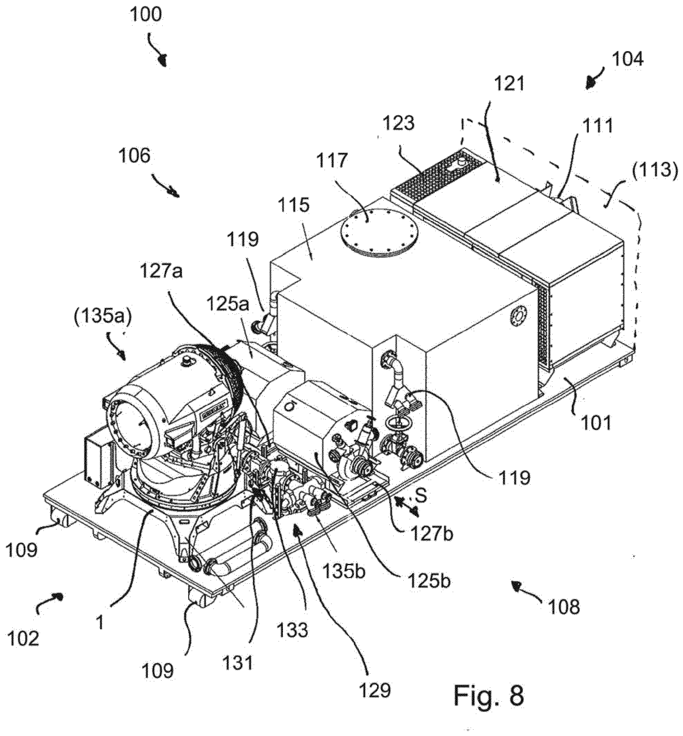

Nachdem die Fig. 1 bis 7 Außen- und Innenansichten des Löschnebelwerfers 1 alleine zeigen, zeigt Fig. 8 eine Weiterbildung des Ausführungsbeispiels hin zu einer mobilen Löschnebelwerferanordnung, die einen Transport des Löschnebelwerfers zu unterschiedlichen Einsatzorten ermöglicht. Die mobile Löschnebelwerferanordnung 100 weist hierzu einen Transportrahmen 101 auf, der nach Art eines Abrollbehälters ausgebildet ist und sich von einer ersten Seite 102 (Heckseite) zu einer zweiten Seite 104 (Frontseite) erstreckt, wobei die Angabe heckwertig und frontwertig jeweils auf die Transportrichtung bei der Fahrt eines Fahrzeuges mit diesem Behälter bezogen ist.

Der Löschnebelwerfer 1 ist im Bereich der Heckseite 102 auf dem Transportrahmen 101 installiert.

An der Frontseite 104 des Transportrahmens 101 ist eine Hakenaufnahme 111 zum Aufnehmen und Absetzen der Löschnebelwerferanordnung 100 auf einem Transportfahrzeug beziehungsweise von einem Transportfahrzeug angeordnet. Der Transportrahmen 101 weist vorzugsweise eine Stirnwandverkleidung 113 auf. Der Rahmenaufbau ist als Flat-Rack aufgebaut.

Die mobile Löschnebelwerferanordnung 100 weist ein Löschmittelreservoir 115, das oberseitig mit einem Mannloch 117 ist, und welches an einer dritten (rechten) Rahmenseite 108 (wiederum bezogen auf die Fahrtrichtung) mehrere Anschlüsse 119 zum Einleiten von Löschmittel in das Löschmittelreservoir 115 aufweist. Vorzugsweise sind auch auf einer (in Fahrtrichtung linken) vierten Rahmenseite 106 ein oder mehrere Anschlüsse 119 angeordnet.

Die mobile Löschnebelwerferanordnung 100 weist ferner einen Generator 121 zum Erzeugen elektrischer Energie auf, vorzugsweise einen Dieselgenerator. Mittels des Generators 121 werden den weiteren Komponenten, insbesondere dem Löschnebelwerfer 1, die erforderliche elektrische Leistung zur Aufrechterhaltung des Betriebs zugeführt. Das Löschmittelreservoir 115 hat vorzugsweise ein Fassungsvermögen von 5.000 Litern oder mehr, insbesondere 6.000 Liter oder mehr.

Die Länge des Transportrahmens von der Heckseite 102 bis zur Frontseite 104 liegt vorzugsweise in einem Bereich von 6 Meter oder mehr, vorzugsweise zwischen 6 Meter und 6,40 Meter. Die Breite von der linken Rahmenseite 106 bis zur rechten Rahmenseite 108 liegt vorzugsweise in einem Bereich von 2,20 bis 2,80 Meter, besonders bevorzugt bei 2,50 Meter, und die Höhe des Transportrahmens inkl. aller Aufbauten liegt vorzugsweise in einem Bereich von 2 Metern oder weniger.

Benachbart zum Generator 121 ist ein Steuerschrank 123 vorgesehen, mit dem die elektrischen Komponenten und der Löschnebelwerfer signalleitend verbunden werden können, und über welchen die Löschnebelwerferanordnung angesteuert werden kann.

Die Löschnebelwerferanordnung 100 weist auf beiden seitlichen Rahmenseiten 106, 108, vorzugsweise symmetrisch, jeweils in einer Auszugrichtung S bewegbare Schienensysteme 127a, 127b zur reversibel lösbaren Montage von Pumpen 125a, beispielsweise sogenannten Tragkraftspitzen, d. h. tragbaren Löschmittelpumpen, wie sie Feuerwehren einsetzen, auf. Die Pumpen 125a, 125b dienen zur Versorgung des Löschnebelwerfers 1 mit druckbeaufschlagten Löschmittel aus dem Löschmittelreservoir 115. Alternativ oder zusätzlich sind auf dem Transportrahmen 111 als Teil eines Rohrsystems 129 ein oder mehrere Rückschlagklappen 131 und/oder Schmutzfangeinrichtungen 133 zum Abscheiden von Feststoffen aus dem Löschmittel vorgesehen.

Ferner weist das Rohrsystem 129 ein oder mehrere Löschmittelanschlüsse 135a, 135b, vorzugsweise zu beiden Seiten des Transportrahmens 101 auf. Die Löschmittelanschlüsse 135a, 135b sind vorzugsweise dazu eingerichtet, mit externen Druckleitungen und/oder mit externen Pumpen verbunden zu werden.

Das Rohrsystem 129 verbindet die Pumpen beziehungsweise Löschmittelanschlüsse 125, 135 mit dem Löschnebelwerfer 1 und insbesondere mit dessen Löschmittelanschluss 20 (siehe obige Figuren).

Es wurden Vergleichsversuche zur Untersuchung der Leistungsfähigkeit des Löschnebelwerfers des vorstehend beschriebenen Ausführungsbeispiels durchgeführt. Verglichen wurden der Löschnebelwerfer gemäß den vorstehenden Figuren und eine Löschturbine aus dem Stand der Technik.

Die Löschturbine aus dem Stand der Technik entspricht in ihren äußeren Abmaßen im Wesentlichen der Vorrichtung aus den vorstehenden Figuren. Die Fluidführung vom Löschmittelanschluss bis hin zur Verteilereinrichtung ist weitgehend identisch. Die Zuleitung zwischen der Verteilereinrichtung und dem Zentralrohr verläuft allerdings durch einen Zuleitungsabschnitt mit nicht-harmonisierter Krümmung, und mit nichtharmonisiertem Querschnitt. Das Löschmittel wird bei der Vorrichtung aus dem Stand der Technik durch mehrere 90°-Winkel, eine innere Einschnürung und mehrere gekrümmte Rohrsegmente gefördert.

Es wurde im Versuch Wasser als Löschmittel eingesetzt. Die Vorrichtungen wurden um die Achse Y mit ihrer Wurfrichtung W um 25° aus der Horizontalen nach oben geneigt.

Der Düsenkranz war bei beiden Vorrichtungen gesperrt, am jeweiligen Zentralrohr waren identische Löschdüsen angebracht, die beide in die Vollstrahl-Endstellung gestellt waren.

Es wurde ein Testaufbau, wie er auch zum Test des Austragsverhaltens von Sprinkleranlagen allgemein bekannt ist, genutzt. In vorbestimmten Entfernungen von den Vorrichtungen wurden Auffangbehälter zur Aufnahme des ausgetragenen Löschmittels platziert, und der Druck der verwendeten Pumpen wurde so gesteuert, dass der Löschmittelaustrag aus dem Zentralrohr 27 (bei Einstellung der ersten Löschdüse 51 in der fokussierten Endstellung) die Auffangbehälter mittig traf. Der hierfür aufgebrachte Löschmitteldruck am Löschmittelanschluss - also am Fluideingang der Vorrichtungen - wurde aufgezeichnet. Die Entfernung, in der noch eine volle Wasserbenetzung erreicht wurde, wurde als Reichweite aufgezeichnet.

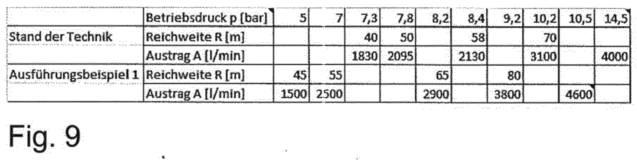

Die Tabelle der Figur 9 führt zwei Messreihen an. In den ersten beiden Spalten sind die erzielte Reichweite R beim Ausbringen von Löschmittel in Metern, und der LöschmittelAustrag in Liter pro Minute jeweils über den Druck p am Löschfluidanschluss (Bezugszeichen 20 beim Ausführungsbeispiel) einer Löschturbine aus dem Stand der Technik abgebildet. Die beiden unteren Spalten der Tabelle aus Figur 9 geben R und A in Abhängigkeit des Drucks p für einen Löschnebelwerfer gemäß den Figuren 1 bis 8 wieder.

Mit der Vorrichtung aus dem Stand der Technik eine Messung erst ab einem Druck von oberhalb 7 bar möglich war, weil die dort verbauten Absperrorgane darunter nicht schalteten. Die Angaben für den Stand der Technik aus der Spalte ganz rechts wurden nicht gemessen, sondern den Angaben des Herstellers der Anlage aus dem Stand der Technik entnommen und Richtigkeit unterstellt.

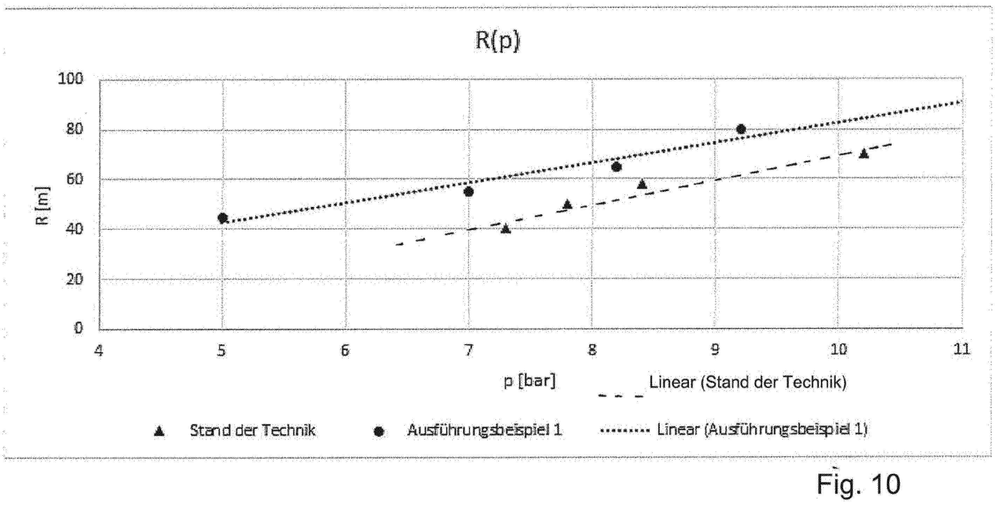

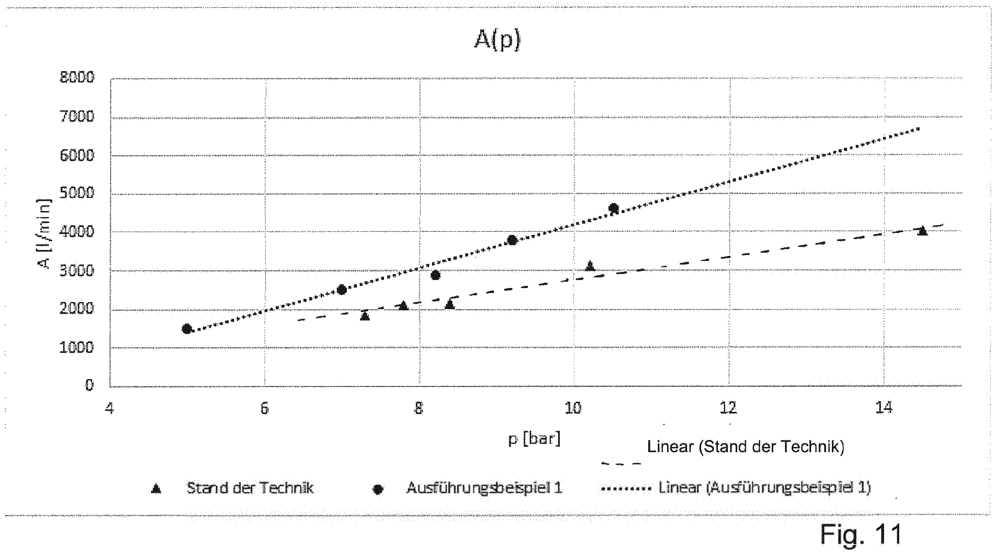

Die Figur 10 visualisiert die erzielte Reichweite R in Abhängigkeit des Drucks (p). Die Figur 11 visualisiert die Menge A des ausgetragenen Löschmittels in Abhängigkeit des Drucks p. Zusätzlich zu den Messpunkten gemäß Figur 9 sind in den Figuren 10 und 11 jeweils lineare Trendlinien eingeblendet worden, welche im gemessenen Arbeitsbereich mit guter Näherung ein lineares Verhalten zeigen.

Die Reichweitenfunktionen Rᵢ(p)= Aᵢ p + Bᵢ ergeben sich näherungsweise zu
(1) R₁(p)= S₁ p + T₁; für das Ausführungsbeispiel der Erfindung, mit S₁=8,0 (m/bar) und T₁=+2,5 m, und
(2) R₂(p)=S₂ p + T₂; für die Vorrichtung aus dem Stand der Technik, mit S₂=9,6 (m/bar) und T₂=-27,1 m.

Die Austragsfunktionen ergeben sich näherungsweise zu:
(3) A₁(p) = B₁ p + G₁; für das Ausführungsbeispiel der Erfindung; mit B1 = 561 (I/(bar min)) und G₁ = -1417 (I/min)
(4) A₂(p)= B₂ p + G₂; für die Vorrichtung aus dem Stand der Technik, mit B₂ = 1302,9 (I/(bar min)) und G₂ = - 288,6 (I/min).

Die Figuren 10 und 11 zeigen deutlich, dass die Performance des Löschnebelwerfers im gemessenen Bereich sowohl in der erzielbaren Reichweite als auch in der ausgetragenen Löschmittelmenge jeweils konsistent oberhalb der Performance des Standes der Technik liegt.

Aus Fig. 10 ergibt sich, dass mit dem Löschnebelwerfer 1 im Vergleich zum Stand der Technik bei geringerem Druck Löschmittel ausgebracht werden kann. Ferner ergibt sich, dass bei gleichem Druck mit dem Löschnebelwerfer der Erfindung eine deutlich höhere Reichweite erzielt wird.

Es zeigt sich, dass für dieselben Austragsmengen gemäß der Erfindung ein geringerer Druck erforderlich war als im Stand der Technik. Es wird ein höherer maximaler Löschmittelaustrag erreicht als beim Stand der Technik, und dies bereits bei deutlich geringeren Betriebsdrücken.

### Bezugszeichenliste:

- 1: Löschnebelwerfer
- 3: Tragstruktur
- 4: Gehäusebasis
- 5: Stützfuß
- 6: Stützstruktur
- 7: Gehäuse
- 9, 11: Drehverbindung
- 13: Staplertasche
- 15: Hubzylinder
- 17: Ausleger
- 19: erste Gehäuseöffnung
- 20: Löschmittelanschluss
- 21: Schutzgitter
- 22: zweite Gehäuseöffnung
- 23: Strömungserzeuger
- 25: Löschdüsenanordnung
- 27: Zentralrohr
- 29: Düsenkranz
- 31: Strömungspfad
- 33: Rotorblättern
- 35: Leuchtmittel
- 37: Verteilereinrichtung
- 39: vertikaler Abschnitt
- 41: horizontaler Abschnitt
- 43: Drehdurchführung, horizontal schwenkbar
- 44: erster Zuleitungsabschnitt
- 45a, b: gerades Rohrsegment
- 46a, b: gekrümmtes Rohrsegment
- 47a, b: gekrümmtes Rohrsegment
- 48.1: Einlassseite, Rohrsegment 46
- 48.1: Auslassseite, Rohrsegment 46
- 49: erstes Absperrorgan
- 51: erste Löschdüse
- 52: Löschdüsenöffnung, erste Löschdüse
- 53: zweite Löschdüse
- 55: zweiter Zuleitungsabschnitt
- 57: zweites Absperrorgan
- 59: Steuerleitung, zweites Absperrorgan
- 61: Steuerleitung, erstes Absperrorgan
- 100: mobile Löschnebelwerferanordnung
- 101: Transportrahmen
- 102: erste Seite (Heck)
- 104: zweite Seite (Front)
- 106: vierte Rahmenseite (links)
- 108: dritte Rahmenseite (rechts)
- 111: Hakenaufnahme
- 113: Stirnwandverkleidung
- 115: Löschmittelreservoir
- 117: Mannloch
- 119: Anschlüsse, Löschmittelreservoir
- 121: Generator
- 123: Steuerschrank
- 125a, 125b: Pumpen
- 127a, 127b: Schienensysteme, Pumpen
- 129: Rohrsystem
- 131: Rückschlagklappen
- 133: Schmutzfangeinrichtung
- 135a, 135b: Löschmittelanschlüsse

- A: Austrag Löschmittel
- C, E, F: Ebene
- L: Luftstrom
- N: Löschnebel
- p: Druck Löschmittel
- R: Reichweite Löschmittel
- S: Auszugrichtung, Schiene
- W: Wurfrichtung
- Y: Horizontalachse
- Z: Vertikalachse
- D₁: erste Nennweite
- D₂: zweite Nennweite

## Patentansprüche

1. Löschnebelwerfer (1), mit
einem Löschmittelanschluss (20) zur Anbindung an eine druckbeaufschlagte Löschmittelversorgung,
einem relativ zum Löschmittelanschluss (20) um eine Vertikalachse (Z) und eine Horizontalachse (Y) schwenkbaren Gehäuse (7) mit einer ersten, einlassseitigen, Gehäuseöffnung (19) und einer zweiten, auslassseitigen, Gehäuseöffnung (22), einem in dem Gehäuse (7) angeordneten Strömungserzeuger, der dazu eingerichtet ist, von der ersten Gehäuseöffnung (19) in Richtung der zweiten Gehäuseöffnung (22) einen Luftstrom (L) bereitzustellen, und
einer der zweiten Gehäuseöffnung (22) zugeordneten Löschdüsenanordnung (25), die fluidleitend mit dem Löschmittelanschluss (20) verbunden und dazu eingerichtet ist, Löschmittel derart abzugeben, dass das Löschmittel von dem Luftstrom (L) erfasst wird,
**dadurch gekennzeichnet, dass** die Löschdüsenanordnung (25) wenigstens ein innerhalb des Gehäuses (7) angeordnetes, in einer Wurfrichtung (W) ausgerichtetes Zentralrohr (27) aufweist,
wobei das Zentralrohr (27) mittels eines Zuleitungsabschnitts (44) fluidleitend mit einer horizontal und vertikal schwenkbaren Verteilereinrichtung (37) verbunden ist, wobei der Zuleitungsabschnitt (44) mit einem harmonischen Krümmungsverlauf ausgebildet ist, wobei der Krümmungsverlauf entweder:
- frei von winkligen Richtungsänderungen und von Krümmungen ist; oder
- eine Anzahl von winkligen Richtungsänderungen aufweist, die aber jede für sich einen Änderungswinkel von 45° nicht überschreiten, und/oder eine Anzahl von Krümmungen aufweist, die aber jede für sich einen Krümmungsradius vom 0,5-fachen ihrer Nennweite überschreiten.

2. Löschnebelwerfer (1) nach Anspruch 1,
**dadurch gekennzeichnet, dass** der Zuleitungsabschnitt (44) aus geraden (45a,b) und/oder bogenförmig gekrümmten Rohrabschnitten (46a,b, 47a,b) gebildet ist.

3. Löschnebelwerfer (1) nach Anspruch 1 oder 2,
**dadurch gekennzeichnet, dass** der Zuleitungsabschnitt (44) innerhalb des Gehäuses (7) angeordnet ist.

4. Löschnebelwerfer (1) nach einem der vorstehenden Ansprüche,
**dadurch gekennzeichnet, dass** der Zuleitungsabschnitt (44) an seinem einlassseitigen Ende einen ersten inneren Leitungsquerschnitt (D₂) aufweist, an seinem auslassseitigen Ende einen zweiten inneren Leitungsquerschnitt aufweist, der größer als der oder gleich dem ersten inneren Leitungsquerschnitt (D₂) ist, und zwischen diesen beiden Enden einen Querschnittsverlauf aufweist, der stets größer als der oder gleich dem ersten inneren Leitungsquerschnitt (D₂) ist.

5. Löschnebelwerfer (1) nach einem der vorstehenden Ansprüche,
**dadurch gekennzeichnet, dass** der Zuleitungsabschnitt (44) einlassseitig zwei Rohrsegmente oder Segmentanordnungen aufweist, die an die Verteilereinrichtung angeschlossen sind, und die auslassseitig bogenförmig und in eine gemeinsame Richtung, insb. in Wurfrichtung (W), konvergierend ineinander münden,
wobei vorzugsweise die Rohrsegmente dieselbe Leitungslänge aufweisen, und weiter vorzugsweise formgleich, besonders bevorzugt symmetrisch, ausgebildet sind.

6. Löschnebelwerfer (1) nach einem der vorstehenden Ansprüche,
**dadurch gekennzeichnet, dass** der Zuleitungsabschnitt (44), vorzugsweise auslassseitig, ein Absperrorgan (49) aufweist, das dazu eingerichtet ist, zwischen einer Sperrstellung und einer Freigabestellung hin und her bewegt zu werden, in der Sperrstellung den Zuleitungsabschnitt (44) zu fluiddicht zu verschließen und in der Freigabestellung freizugeben, wobei das Absperrorgan (49) in der Freigabestellung einen Durchlass-Querschnitt aufweist, der gleich dem, oder größer als der, erste innere Leitungs-Querschnitt des Zuleitungsabschnitts ist.

7. Löschnebelwerfer (1) nach einem der vorstehenden Ansprüche,
**dadurch gekennzeichnet, dass** dem Zentralrohr (27) auslassseitig ein Anschluss zum Ankoppeln einer ersten Löschdüse (51) zugeordnet ist,
wobei vorzugsweise die erste Löschdüse (51) Einstellmittel zum Justieren des Sprühbildes zwischen einer ersten, fokussierten, Endstellung, und einer zweiten, aufgeweiteten, Endstellung aufweist, wobei die Einstellmittel vorzugsweise pneumatisch, hydraulisch oder elektrisch gesteuert sind.

8. Löschnebelwerfer (1) nach einem der vorstehenden Ansprüche,
**dadurch gekennzeichnet, dass** die Löschdüsenanordnung (25) einen Düsenkranz (29) aufweist, welcher sich umfänglich, vorzugsweise auf der Innenseite, an der zweiten Gehäuseöffnung (22) entlang erstreckt, wobei der Düsenkranz (29) vorzugsweise mehrere entlang eines Umfangs des Düsenkranzes (29) angeordnete, vorzugsweise zweite, Löschdüsen (53) aufweist, die zum Erzeugen und Abgeben eines Löschmittel-Sprühnebels (N) derart eingerichtet sind, dass der Löschmittel-Sprühnebel (N) von dem erzeugten Luftstrom (L) in Wurfrichtung (W) erfasst wird.

9. Löschnebelwerfer (1) nach Anspruch 8,
**dadurch gekennzeichnet, dass** der Düsenkranz (29) mittels eines zweiten Zuleitungsabschnitts (55) fluidleitend direkt mit der Verteilereinrichtung (37) verbunden ist, wobei der zweite Zuleitungsabschnitt (55) mit einem harmonischen Krümmungsverlauf ausgebildet ist.

10. Löschnebelwerfer (1) nach Anspruch 8 oder 9,
**dadurch gekennzeichnet, dass** der zweite Zuleitungsabschnitt (55) aus geraden und/oder bogenförmig gekrümmten Rohrabschnitten (42, 44, 47a,b) gebildet ist.

11. Löschnebelwerfer (1) nach einem der Ansprüche 8 bis 10,
**dadurch gekennzeichnet, dass** der zweite Zuleitungsabschnitt (55) an seinem einlassseitigen Ende einen ersten inneren Leitungsquerschnitt (D₂) aufweist, an seinem auslassseitigen Ende einen zweiten inneren Leitungsquerschnitt aufweist, der größer als der oder gleich dem ersten inneren Leitungsquerschnitt (D₂) ist, und zwischen diesen beiden Enden einen Querschnittsverlauf aufweist, der stets größer als der oder gleich dem ersten inneren Leitungsquerschnitt (D₂) ist.

12. Löschnebelwerfer (1) nach einem der Ansprüche 8 bis 11,
**dadurch gekennzeichnet, dass** der zweite Zuleitungsabschnitt (55), vorzugsweise auslassseitig, ein Absperrorgan (57) aufweist, das dazu eingerichtet ist, zwischen einer Sperrstellung und einer Freigabestellung hin und her bewegt zu werden, in der Sperrstellung den zweiten Zuleitungsabschnitt (55) fluiddicht zu verschließen und in der Freigabestellung freizugeben, wobei das Absperrorgan (57) in der Freigabestellung einen Durchlass-Querschnitt aufweist, der gleich dem, oder größer als der, erste innere Leitungs-Querschnitt des Zuleitungsabschnitts ist.

13. Löschnebelwerfer (1) nach einem der vorstehenden Ansprüche,
**dadurch gekennzeichnet, dass** das Gehäuse (7) zum Ausführen der Bewegung um die Horizontalachse (Y) mit einem oder mehrerer fluidtechnisch betätigten Hubzylinder wirkverbunden ist, wobei der oder die Hubzylinder dazu eingerichtet sind, das Gehäuse (7) zwischen einer aufwärts geneigten und einer abwärts geneigten Endstellung hin und her zu schwenken.

14. Mobile Löschnebelwerferanordnung (100), mit
einem Transportrahmen (101), insbesondere einem Absetz- oder Abrollrahmen, und einem auf dem Transportrahmen befestigten Löschnebelwerfer (1),
wobei der Löschnebelwerfer (1) nach einem der vorstehenden Ansprüche ausgebildet ist.

15. Verfahren zur Löschmittelausbringung aus seiner Löschdüsenanordnung (25), welche ein Zentralrohr (27) und eine dem Zentralrohr zugeordnete Löschdüse (51) aufweist, umfassend die Schritte:
- Bereitstellen eines druckbeaufschlagten Löschmittels,
- Fördern des druckbeaufschlagten Löschmittels zu der Löschdüse (51), und
- Ausbringen des druckbeaufschlagten Löschmittels aus der Löschdüse (51), wobei der Schritt des Förderns ein Durchleiten des druckbeaufschlagten Löschmittels durch einen stromaufwärts benachbart zum Zentralrohr (27) angeordneten Zuleitungsabschnitt (44) erfolgt, welcher mit einem harmonischen Krümmungsverlauf ausgebildet ist, wobei der Krümmungsverlauf entweder:
- frei von winkligen Richtungsänderungen und von Krümmungen ist; oder
- eine Anzahl von winkligen Richtungsänderungen aufweist, die aber jede für sich einen Änderungswinkel von 45° nicht überschreiten, und/oder eine Anzahl von Krümmungen aufweist, die aber jede für sich einen Krümmungsradius vom 0,5-fachen ihrer Nennweite überschreiten.

## Claims

1. Extinguishing mist monitor (1), comprising
an extinguishing agent connection (20) for connection to a pressurised extinguishing agent supply,
a housing (7) pivotable relative to the extinguishing agent connection (20) about a vertical axis (Z) and a horizontal axis (Y), having a first, inlet-side, housing opening (19) and a second, outlet-side, housing opening (22),
a flow generator arranged in the housing (7), which is configured to provide an air flow (L) from the first housing opening (19) in the direction of the second housing opening (22), and
an extinguishing nozzle arrangement (25) associated with the second housing opening (22), which is in fluid communication with the extinguishing agent connection (20) and is configured to discharge extinguishing agent such that the extinguishing agent is captured by the air flow (L),
**characterized in that** the extinguishing nozzle arrangement (25) comprises at least one central pipe (27) arranged inside the housing (7) and oriented in a throwing direction (W),
wherein the central pipe (27) is in fluid communication with a horizontally and vertically pivotable distribution device (37) by means of a supply line section (44), wherein the supply line section (44) is formed with a harmonious curvature profile, wherein the curvature profile either:
- is free of angular changes of direction and of curvatures; or
- comprises a number of angular changes of direction, each of which individually does not exceed a change angle of 45°, and/or comprises a number of curvatures, each of which individually exceeds a radius of curvature of 0.5 times its nominal diameter.

2. Extinguishing mist monitor (1) according to claim 1,
**characterized in that** the supply line section (44) is formed from straight (45a, b) and/or arcuately curved pipe sections (46a, b, 47a, b).

3. Extinguishing mist monitor (1) according to claim 1 or 2,
**characterized in that** the supply line section (44) is arranged inside the housing (7).

4. Extinguishing mist monitor (1) according to any one of the preceding claims,
**characterized in that** the supply line section (44) has a first inner pipe cross-section (D₂) at its inlet-side end, has a second inner pipe cross-section at its outlet-side end that is greater than or equal to the first inner pipe cross-section (D₂), and has a cross-sectional profile between these two ends that is always greater than or equal to the first inner pipe cross-section (D₂).

5. Extinguishing mist monitor (1) according to any one of the preceding claims,
**characterized in that** the supply line section (44) has, on the inlet side, two pipe segments or segment arrangements which are connected to the distribution device and which merge into one another on the outlet side in an arcuate manner and converging in a common direction, in particular in the throwing direction (W), wherein preferably the pipe segments have the same conduit length, and further preferably are formed identically in shape, particularly preferably symmetrically.

6. Extinguishing mist monitor (1) according to any one of the preceding claims,
**characterized in that** the supply line section (44), preferably on the outlet side, has a shut-off element (49) which is configured to be moved back and forth between a closed position and an open position, to close the supply line section (44) in a fluid-tight manner in the closed position and to release it in the open position, wherein the shut-off element (49) in the open position has a passage cross-section that is equal to or greater than the first inner pipe cross-section of the supply line section.

7. Extinguishing mist monitor (1) according to any one of the preceding claims,
**characterized in that** a connection for coupling a first extinguishing nozzle (51) is associated with the central pipe (27) on the outlet side, wherein preferably the first extinguishing nozzle (51) has adjusting means for adjusting the spray pattern between a first, focused, end position and a second, widened, end position, wherein the adjusting means are preferably pneumatically, hydraulically or electrically controlled.

8. Extinguishing mist monitor (1) according to any one of the preceding claims,
**characterized in that** the extinguishing nozzle arrangement (25) has a nozzle ring (29) which extends circumferentially, preferably on the inside, along the second housing opening (22), wherein the nozzle ring (29) preferably has a plurality of, preferably second, extinguishing nozzles (53) arranged along a circumference of the nozzle ring (29), which are configured to generate and discharge an extinguishing agent spray mist (N) such that the extinguishing agent spray mist (N) is captured in the throwing direction (W) by the generated air flow (L).

9. Extinguishing mist monitor (1) according to claim 8,
**characterized in that** the nozzle ring (29) is in fluid communication directly with the distribution device (37) by means of a second supply line section (55), wherein the second supply line section (55) is formed with a harmonious curvature profile.

10. Extinguishing mist monitor (1) according to claim 8 or 9,
**characterized in that** the second supply line section (55) is formed from straight and/or arcuately curved pipe sections (42, 44, 47a, b).

11. Extinguishing mist monitor (1) according to any one of claims 8 to 10,
**characterized in that** the second supply line section (55) has a first inner pipe cross-section (D₂) at its inlet-side end, has a second inner pipe cross-section at its outlet-side end that is greater than or equal to the first inner pipe cross-section (D₂), and has a cross-sectional profile between these two ends that is always greater than or equal to the first inner pipe cross-section (D₂).

12. Extinguishing mist monitor (1) according to any one of claims 8 to 11,
**characterized in that** the second supply line section (55), preferably on the outlet side, has a shut-off element (57) which is configured to be moved back and forth between a closed position and an open position, to close the second supply line section (55) in a fluid-tight manner in the closed position and to release it in the open position, wherein the shut-off element (57) in the open position has a passage cross-section that is equal to or greater than the first inner pipe cross-section of the supply line section.

13. Extinguishing mist monitor (1) according to any one of the preceding claims,
**characterized in that** the housing (7) is operatively connected to one or more fluid-actuated lifting cylinders for performing the movement about the horizontal axis (Y), wherein the lifting cylinder or cylinders are configured to pivot the housing (7) back and forth between an upwardly inclined and a downwardly inclined end position.

14. Mobile extinguishing mist monitor arrangement (100), comprising a transport frame (101), in particular a hook-lift frame or roll-off frame, and an extinguishing mist monitor (1) mounted on the transport frame, wherein the extinguishing mist monitor (1) is configured according to any of the preceding claims.

15. Method for discharging an extinguishing agent from an extinguishing nozzle arrangement (25), which comprises a central pipe (27) and an extinguishing nozzle (51) associated with the central pipe, comprising the steps of:
providing a pressurised extinguishing agent,
conveying the pressurised extinguishing agent to the extinguishing nozzle (51), and
discharging the pressurised extinguishing agent from the extinguishing nozzle (51), wherein the step of conveying comprises passing the pressurised extinguishing agent through a supply line section (44) arranged upstream adjacent to the central pipe (27), which is formed with a harmonious curvature profile, wherein the curvature profile is either:
free of angular changes of direction and of curvatures; or
comprises a number of angular changes of direction, each of which individually does not exceed a change angle of 45°, and/or comprises a number of curvatures, each of which individually exceeds a radius of curvature of 0.5 times its nominal diameter.

## Revendications

1. Lance à brouillard d'extinction (1), avec
un raccord d'agent extincteur (20) pour le raccordement à une alimentation en agent extincteur sous pression,
un boîtier (7) pouvant pivoter autour d'un axe vertical (Z) et d'un axe horizontal (Y) par rapport au raccord d'agent extincteur (20) avec une première ouverture de boîtier (19) côté entrée et une deuxième ouverture de boîtier (22) côté sortie,
un générateur de flux disposé dans le boîtier (7), qui est conçu pour fournir un flux d'air (L) depuis la première ouverture de boîtier (19) en direction de la deuxième ouverture de boîtier (22), et
un arrangement de buses d'extinction (25) associé à la deuxième ouverture de boîtier (22), qui est en communication fluidique avec le raccord d'agent extincteur (20) et conçu pour décharger un agent extincteur de sorte que l'agent extincteur soit capté par le flux d'air (L),
**caractérisé en ce que** l'arrangement de buses d'extinction (25) présente au moins un tube central (27) disposé à l'intérieur du boîtier (7), orienté dans une direction de projection (W),
dans lequel le tube central (27) est en communication fluidique avec un dispositif de distribution (37) pivotant horizontalement et verticalement au moyen d'un tronçon de conduite d'alimentation (44), dans lequel le tronçon de conduite d'alimentation (44) est réalisé avec un profil de courbure harmonieux, dans lequel le profil de courbure soit :
est exempt de changements de direction angulaires et de courbures ; soit
présente un nombre de changements de direction angulaires qui chacun ne dépasse cependant pas un angle de changement de 45°, et/ou présente un nombre de courbures qui chacune dépasse cependant un rayon de courbure de 0,5 fois leur diamètre nominal.

2. Lance àbrouillard d'extinction (1) selon la revendication 1,
**caractérisé en ce que** le tronçon de conduite d'alimentation (44) est formé de tronçons de tube droits (45a,b) et/ou courbés de manière arquée (46a,b, 47a,b).

3. Lance àbrouillard d'extinction (1) selon la revendication 1 ou 2,
**caractérisé en ce que** le tronçon de conduite d'alimentation (44) est disposé à l'intérieur du boîtier (7).

4. Lance à brouillard d'extinction (1) selon l'une quelconque des revendications précédentes,
**caractérisé en ce que** le tronçon de conduite d'alimentation (44) présente, à son extrémité côté entrée, une première coupe transversale intérieure de la conduite (D₂), présente, à son extrémité côté sortie, une deuxième coupe transversale intérieure de la conduite qui est supérieure ou égale à la première coupe transversale intérieure de la conduite (D₂), et présente, entre ces deux extrémités, un profil de coupe transversale qui est toujours supérieur ou égal à la première coupe transversale intérieure de la conduite (D₂).

5. Lance à brouillard d'extinction (1) selon l'une quelconque des revendications précédentes,
**caractérisé en ce que** le tronçon de conduite d'alimentation (44) présente, côté entrée, deux segments de tube ou arrangements de segments qui sont raccordés au dispositif de distribution et qui débouchent, côté sortie, en forme d'arc et de manière à converger l'un dans l'autre dans une direction commune, en particulier dans la direction de projection (W),
dans lequel les segments de tube présentent de préférence la même longueur de conduite, et sont mieux encore de forme identique, de manière particulièrement préférée symétriques.

6. Lance à brouillard d'extinction (1) selon l'une quelconque des revendications précédentes,
**caractérisé en ce que** le tronçon de conduite d'alimentation (44), de préférence côté sortie, présente un organe d'arrêt (49), qui est conçu pour être animé d'un mouvement de va-et-vient entre une position de fermeture et une position d'ouverture, pour fermer le tronçon de conduite d'alimentation (44) de manière étanche aux fluides dans la position de fermeture et pour le libérer dans la position d'ouverture, dans lequel l'organe d'arrêt (49) dans la position d'ouverture présente une coupe transversale de passage qui est supérieure ou égale à la première coupe transversale intérieure de la conduite du tronçon de conduite d'alimentation.

7. Lance à brouillard d'extinction (1) selon l'une quelconque des revendications précédentes,
**caractérisé en ce qu'**un raccord de couplage d'une première buse d'extinction (51) est associé, côté sortie, au tube central (27),
dans lequel, de préférence, la première buse d'extinction (51) présente des moyens de réglage pour ajuster le profil de pulvérisation entre une première position finale focalisée et une deuxième position finale élargie, dans lequel les moyens de réglage sont de préférence commandés pneumatiquement, hydrauliquement ou électriquement.

8. Lance à brouillard d'extinction (1) selon l'une quelconque des revendications précédentes,
**caractérisé en ce que** l'arrangement de buses d'extinction (25) présente une couronne de buses (29), laquelle s'étend circonférentiellement, de préférence sur la face intérieure, le long de la deuxième ouverture de boîtier (22), dans lequel la couronne de buses (29) présente de préférence plusieurs buses d'extinction (53), de préférence des deuxièmes, disposées le long d'une circonférence de la couronne de buses (29), qui sont conçues pour générer et distribuer un brouillard de pulvérisation d'agent extincteur (N), de sorte que le brouillard de pulvérisation d'agent extincteur (N) soit capté par le flux d'air (L) généré dans la direction de projection (W).

9. Lance à brouillard d'extinction (1) selon la revendication 8,
**caractérisé en ce que** la couronne de buses (29) est directement en communication fluidique avec le dispositif de distribution (37) au moyen d'un deuxième tronçon de conduite d'alimentation (55), dans lequel le deuxième tronçon de conduite d'alimentation (55) est réalisé avec un profil de courbure harmonieux.

10. Lance à brouillard d'extinction (1) selon la revendication 8 ou 9,
**caractérisé en ce que** le deuxième tronçon de conduite d'alimentation (55) est formé de tronçons de tube droits et/ou courbés de manière arquée (42, 44, 47a, b).

11. Lance à brouillard d'extinction (1) selon l'une quelconque des revendications 8 à 10,
**caractérisé en ce que** le deuxième tronçon de conduite d'alimentation (55) présente, à son extrémité côté entrée, une première coupe transversale intérieure de la conduite (D2₎, présente, à son extrémité côté sortie, une deuxième coupe transversale intérieure de la conduite qui est supérieure ou égale à la première coupe transversale intérieure de la conduite (D₂), et présente, entre ces deux extrémités, un profil de coupe transversale qui est toujours supérieur ou égal à la première coupe transversale intérieure de la conduite (D₂).

12. Lance à brouillard d'extinction (1) selon l'une quelconque des revendications 8 à 11,
**caractérisé en ce que** le deuxième tronçon de conduite d'alimentation (55), de préférence côté sortie, présente un organe d'arrêt (57), qui est conçu pour être animé d'un mouvement de va-et-vient entre une position de fermeture et une position d'ouverture, pour fermer le deuxième tronçon de conduite d'alimentation (55) de manière étanche aux fluides dans la position de fermeture et pour le libérer dans la position d'ouverture, dans lequel l'organe d'arrêt (57) présente, dans la position d'ouverture, une coupe transversale de passage qui est supérieure ou égale à la première coupe transversale intérieure de la conduite du tronçon de conduite d'alimentation.

13. Lance à brouillard d'extinction (1) selon l'une quelconque des revendications précédentes,
**caractérisé en ce que** le boîtier (7) pour exécuter le mouvement autour de l'axe horizontal (Y) est en liaison fonctionnelle avec un ou plusieurs vérins de levage actionnés par fluide, dans lequel le ou les vérins de levage sont conçus pour faire pivoter le boîtier (7) en va-et-vient entre une position finale inclinée vers le haut et une position finale inclinée vers le bas, dans lequel de préférence les vérins de levage (18) sont de préférence orientés de sorte qu'ils sont plus rentrés dans la position finale inclinée vers le bas que dans la position finale inclinée vers le haut, en particulier complètement rentrés dans la position finale inclinée vers le bas et complètement sortis dans la position finale inclinée vers le haut.

14. Arrangement mobile de lance à brouillard d'extinction (100), avec
un cadre de transport (101), en particulier un cadre de dépose ou cadre à décrochage par roulement, et une lance à brouillard d'extinction (1) fixée sur le cadre de transport,
dans lequel la lance à brouillard d'extinction (1) est réalisée selon l'une quelconque des revendications précédentes.

15. Procédé de décharge d'agent extincteur à partir de son arrangement de buses d'extinction (25), lequel présente un tube central (27) et une buse d'extinction (51) associée au tube central, comprenant les étapes de :
mise à disposition d'un agent extincteur sous pression,
acheminement de l'agent extincteur sous pression vers la buse d'extinction (51), et
décharge de l'agent extincteur sous pression à partir de la buse d'extinction (51),
dans lequel l'étape d'acheminement consiste à faire passer l'agent extincteur sous pression par un tronçon de conduite d'alimentation (44) disposé en amont, adjacent au tube central (27), lequel est réalisé avec un profil de courbure harmonieux, dans lequel le profil de courbure harmonieux soit :
est exempt de changements de direction angulaires et de courbures ; soit
présente un nombre de changements de direction angulaires qui chacun ne dépasse cependant pas un angle de changement de 45°, et/ou présente un nombre de courbures qui chacune dépasse cependant un rayon de courbure de 0,5 fois leur diamètre nominal.
